# EUROPEAN PATENT APPLICATION

(11) **EP 4 575 905 A1**
(43) Date of publication of application: **25.06.2025**
(21) Application number: 24215308.8
(22) Date of filing: 26.11.2024
(51) Int. Cl.: G06N 3/063

(54) **METHODS AND NEURAL NETWORK ACCELERATORS FOR EXECUTING A DYNAMIC NEURAL NETWORK**

(30) Priority: 22.12.2023 GB 202320004
(71) Applicant: Imagination Technologies Limited, Kings Langley, Hertfordshire WD4 8LZ (GB)
(72) Inventor: Huang, Xiran, Kings Langley, WD4 8LZ (GB)
(74) Representative: Slingsby Partners LLP

(57) **Abstract**

Neural network accelerators with one or more neural network accelerator cores. Each neural network accelerator core comprises: one or more hardware accelerators configured to accelerate one or more neural network operations; an embedded processor; a command decoder; and a hardware feedback path between the embedded processor and the command decoder. The command decoder of at least one neural network accelerator core of the one or more neural network accelerator cores is configured to control the one or more hardware accelerators and the embedded processor of that core in accordance with commands of a command stream, and when the command stream comprises a set of one or more branch commands that indicate a conditional branch is to be performed, cause the embedded processor to determine a next command stream, and in response to receiving information from the embedded processor identifying the next command stream via the hardware feedback path, control the one or more hardware accelerators and the embedded processor in accordance with commands of the next command stream.

## Description

### CROSS-REFERENCE TO RELATED APPLICATION

This application claims priority from UK patent application GB2320004.1, filed on 22 December 2023, which are each herein incorporated by reference in their entirety.

### TECHNICAL FIELD

This application is directed to methods and neural network accelerators for executing a dynamic neural network.

### BACKGROUND

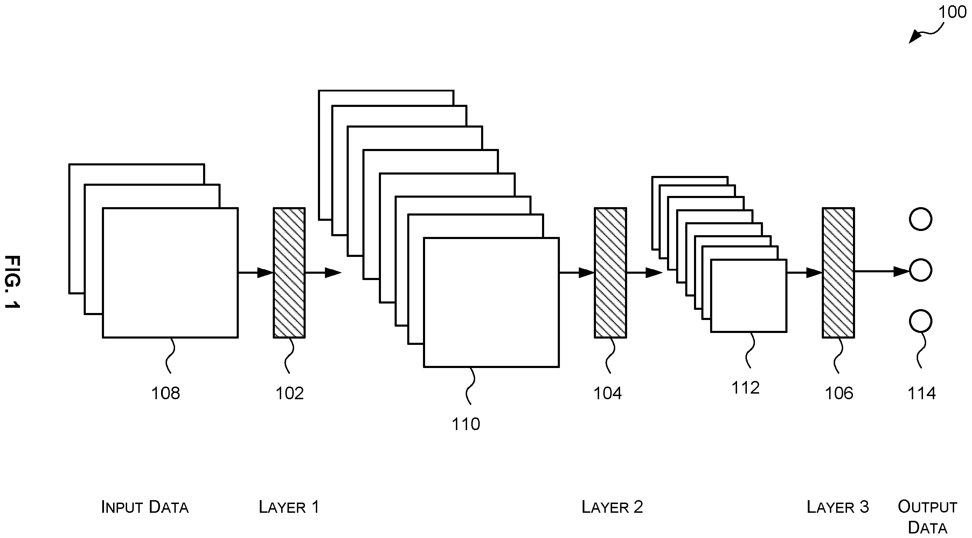

An artificial neural network, which will be referred to herein as a neural network, comprises one or more interconnected layers that can be used for machine learning applications. In particular, a neural network can be used in signal processing applications, including, but not limited to, image processing and computer vision applications. FIG. 1 illustrates an example neural network 100 that comprises a plurality of layers 102, 104, 106. Each layer 102, 104, 106 receives input data, and processes the input data in accordance with the layer to produce output data. The output data is either provided to another layer as the input data or is output as the final output data of the neural network. For example, in the neural network 100 of FIG. 1, the first layer 102 receives the original input data 108 to the neural network 100 and processes the input data in accordance with the first layer 102 to produce output data 110. The output data 110 of the first layer 102 becomes the input data to the second layer 104, and the second layer 104 processes the input data 110 in accordance with the second layer 104 to produce output data 112. The output data 112 of the second layer 104 becomes the input data to the third layer 106, and the third layer 106 processes the input data 112 in accordance with the third layer 106 to produce output data 114. The output data 114 of the third layer 106 is then output as the final output data of the neural network. Where the neural network is used for classification, the final output data may be a vector of length *A*, wherein *A* is the number of classes and each value in the vector represents the probability of a certain class.

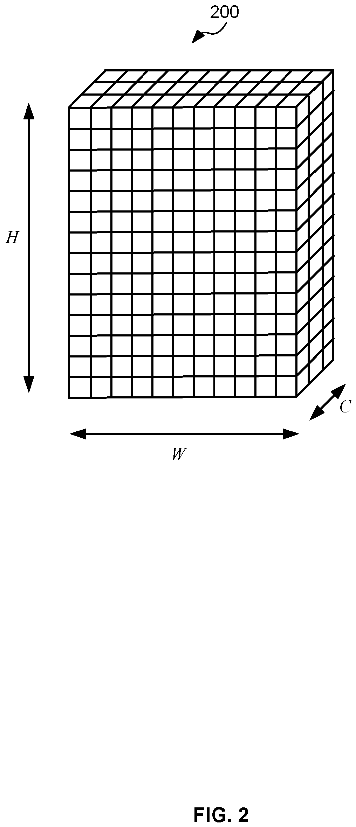

The data input to and output from a layer of a neural network can be described as a tensor. As is known to those of skill in the art, a tensor is a generalization of vectors and matrices and can be considered as an *n*-dimensional array. A vector is a one-dimensional tensor, and a matrix is a two-dimensional tensor. The tensors in a neural network are often, but are not necessarily, four-dimensional. Reference is made to FIG. 2 which illustrates an example four-dimensional (4D) tensor 200 in which one dimension (e.g. corresponding to the batch size) has been suppressed for visualisation purposes. The 4D tensor 200 may be described as comprising one or more 3D tensors, wherein each 3D tensor comprises *C* planes of data, where each plane has a dimension *W* × *H.* Each plane may be referred to as a channel of the tensor. The number of 3D tensors may be referred to as the batch size. Each 3D tensor may be, for example, an image. An element of a tensor may be referred to as a tensel, akin to how an element of a picture is referred to as a pixel.

The processing that is performed on the input tensor to a layer depends on the type of layer. For example, each layer of a neural network may be one of a plurality of different types. Example neural network layer types include, but are not limited to, a convolution layer, an activation layer, a normalisation layer, a pooling layer, a fully connected layer, and a batch normalisation layer. It will be evident to a person of skill in the art that these are example neural network layer types and that this is not an exhaustive list and there may be other neural network layer types.

A convolution layer convolves the input tensor with weights associated with the layer. Specifically, each convolution layer is associated with a plurality of weights *k*₁ ... *k_{g}*, which may also be referred to as filter weights or coefficients. The weights are grouped to form one or more filters or kernels, and each filter may be associated with an offset bias *bias.* Each filter may have a dimension *K_{W}* × *K_{H}* × *Cᵢₙ* (i.e., each filter may comprise a set of *K_{W}* × *K_{H}* × *Cᵢₙ* weights *k*), where *Cᵢₙ* is the number of channels in the input tensor. Each filter may be applied to the input tensor according to a convolution operation across steps *s_{W}* and *s_{H}* in the *W* and *H* directions. The step sizes *s_{w}* and *s_{H}* may be referred to as the strides of the convolution. The number and dimensions of filters and/or the number of weights per filter may vary between convolution layers. A convolutional neural network (CNN), which is a specific type of neural network that is effective for image recognition and classification, generally comprises a plurality of convolution layers.

An activation layer, which often, but not necessarily, follows a convolution layer, applies one or more activation functions to the input tensor. An activation function receives an input tensor and performs a certain non-linear mathematical operation on each value or element in the input tensor. In other words, the activation function operates on each value or element in the input tensor separately. In some examples, an activation layer may act as rectified linear unit (ReLU) by implementing an ReLU function or a leaky rectified linear unit (LReLU) by implementing a LReLU function.

A normalisation layer is configured to perform a normalising function, such as a Local Response Normalisation (LRN) function on the input tensor.

A pooling layer performs a pooling function, such as a max, min or average function, to summarise subsets of the input tensor. The purpose of a pooling layer is thus to reduce the spatial size of the representation to reduce the number of parameters and computation in the network, and hence to also control overfitting.

A fully connected layer, which often, but not necessarily, follows a plurality of convolution and pooling layers, takes a two-dimensional tensor (e.g. a tensor with a batch size and a channel dimension) of input data values and outputs a two-dimensional tensor (e.g. a tensor with a batch size dimension and a channel dimension). Where the DNN is used for classification, the output may have A channels where A is the number of classes, and each value in the tensor may represent the probability of a certain class. The output tensor is generated through a matrix multiplication of a set of weights, optionally followed by a bias offset. A fully connected layer thus receives a set of weights and may receive a bias.

A batch normalisation (often referred to as "batch norm") layer, which often, but not necessarily, follows a convolution layer, applies a per channel affine transformation to an input tensor. Batch normalisation layers may be added to a neural network to make training of the neural network faster and more stable by normalisation of a subsequent layer's inputs by re-centring and re-scaling.

Many neural networks are static - i.e., they have a fixed sequence of layers or operations which are applied to each set of input data. For example, a static neural network may comprise a convolution layer, an activation layer, a second convolution layer, and a second activation layer and each set of input data to the neural network (e.g., each inference) is processed by those four layers in that order. However, there are some neural networks which are dynamic, meaning the layers or operations which are applied to a set of input data, and/or the number of times a set of layers is applied to a set of input data, is dynamic or can change. For example, a dynamic neural network may (i) apply layers 1, 2, 3 in some cases and layers 4, 5, 6 in other cases; or (ii) apply layers 1,2,3 once in some case and layers 1, 2, 3 three times in other cases. A dynamic neural network is thus a network that comprises one or more loops and/or branches. An example of a dynamic neural network is a recurrent neural network with reinforcement learning wherein the layers or operations that are applied to a set of input data are based on a dynamic input.

A recurrent neural network with reinforcement learning may be used, for example, to control a robot or for natural language processing. If a recurrent neural network with reinforcement learning is used to control a robot the neural network receives an input (which represents the environment) and the state (the result from the last interaction) and produces an output to guide the robot's actions. In contrast, if a recurrent neural network with reinforcement learning is used for natural language processing the neural network may process each word based on the state and other words that have recently been processed in order to understand and/or translate sentences. In both examples the operations that are performed on a set of input data is quite similar each time, but it is the number of times that the operations are performed that is variable. For example, the number of times the operations are performed on an input sentence may depend on the number of words in the sentence.

As dynamic neural networks are becoming more prolific it is desirable to be able to execute such networks in a hardware efficient manner (e.g., in a manner that requires less silicon area, less system bandwidth or less processing power).

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Described herein are neural network accelerators with one or more neural network accelerator cores. Each neural network accelerator core comprises: one or more hardware accelerators configured to accelerate one or more neural network operations; an embedded processor; a command decoder; and a hardware feedback path between the embedded processor and the command decoder. The command decoder of at least one neural network accelerator core of the one or more neural network accelerator cores is configured to control the one or more hardware accelerators and the embedded processor of that core in accordance with commands of a command stream, and when the command stream comprises a set of one or more branch commands that indicate a conditional branch is to be performed, cause the embedded processor to determine a next command stream, and in response to receiving information from the embedded processor identifying the next command stream via the hardware feedback path, control the one or more hardware accelerators and the embedded processor in accordance with commands of the next command stream.

A first aspect provides a neural network accelerator comprising one or more neural network accelerator cores, each neural network accelerator core comprising: one or more hardware accelerators, each hardware accelerator configured to accelerate one or more neural network operations; an embedded processor; a command decoder; and a hardware feedback path between the embedded processor and the command decoder; wherein the command decoder of at least one neural network accelerator core of the one or more neural network accelerator cores is configured to control the one or more hardware accelerators and the embedded processor of that core in accordance with commands of a command stream, and when the command stream comprises a set of one or more branch commands that indicate a conditional branch is to be performed, cause the embedded processor to determine a next command stream, and in response to receiving information from the embedded processor identifying the next command stream via the hardware feedback path, control the one or more hardware accelerators and the embedded processor in accordance with commands of the next command stream.

A second aspect provides a method of processing a dynamic neural network at a neural network accelerator comprising one or more hardware accelerators, an embedded processor, and a command decoder, the method comprising, at the command decoder: controlling the one or more hardware accelerators and the embedded processor in accordance with commands of a command stream; in response to determining that the command stream comprises a set of one or more branch commands that indicate that a conditional branch is to be performed, cause the embedded processor to determine a next command stream; and in response to receiving information from the embedded processor identifying the next command stream, controlling the one or more hardware accelerators and the embedded processor in accordance with commands of the next command stream.

A third aspect provides a neural network accelerator comprising one or more hardware accelerators, an embedded processor and a command decoder, wherein the neural network accelerator is configured to perform the method of the second aspect.

The neural network accelerators described herein may be embodied in hardware on an integrated circuit. There may be provided a method of manufacturing, at an integrated circuit manufacturing system, a neural network accelerator as described herein. There may be provided an integrated circuit definition dataset that, when processed in an integrated circuit manufacturing system, configures the system to manufacture a neural network accelerator as described herein. There may be provided a non-transitory computer readable storage medium having stored thereon a computer readable description of a neural network accelerator as described herein that, when processed in an integrated circuit manufacturing system, causes the integrated circuit manufacturing system to manufacture an integrated circuit embodying the neural network accelerator.

There may be provided an integrated circuit manufacturing system comprising: a non-transitory computer readable storage medium having stored thereon a computer readable description of a neural network accelerator described herein; a layout processing system configured to process the computer readable description so as to generate a circuit layout description of an integrated circuit embodying the neural network accelerator; and an integrated circuit generation system configured to manufacture the neural network accelerator according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
FIG. 1 is a schematic diagram of an example neural network;
FIG. 2 is a schematic diagram illustrating an example tensor;
FIG. 3 is a schematic diagram of an example dynamic neural network divided into a plurality of command streams;
FIG. 4 is a block diagram of a first example neural network accelerator with an embedded processor and a command decoder;
FIG. 5 is a block diagram illustrating example implementations of the embedded processor and the command decoder of FIG. 4;
FIG. 6 is a flow diagram of an example method of processing a set of branch commands which may be implemented by the command decoder of FIG. 4;
FIG. 7 is a flow diagram of an example method of determining the next command stream to be executed from the information received from the embedded processor which may be implemented by the command decoder of FIG. 4;
FIG. 8 is a block diagram of a second example neural network accelerator with a plurality of NNA cores wherein each NNA core comprises a command decoder;
FIG. 9 is a flow diagram of an example method of processing a set of branch commands that relate to an unconditional branch which may be implemented by a command decoder of FIG. 8;
FIG. 10 is a schematic diagram illustrating a command stream with a set of independent branch commands;
FIG. 11 is a schematic diagram illustrating two command streams with related branch commands;
FIG. 12 is a schematic diagram illustrating a set of command streams and a macro function;
FIG. 13 is a flow diagram of an example method of executing a dynamic neural network on a neural network accelerator comprising one or more hardware accelerators to accelerate one or more neural network operations, an embedded processor and a command decoder configured to control the operation of the one or more hardware accelerators and the embedded processor;
FIG. 14 is a block diagram of an example convolution accelerator comprising a plurality of convolution engines;
FIG. 15 is a block diagram of an example convolution engine of FIG. 14;
FIG. 16 is a block diagram of an example computer system in which the neural network accelerators described herein may be implemented; and
FIG. 17 is a block diagram of an example integrated circuit manufacturing system for generating an integrated circuit embodying a neural network accelerator described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

Described herein are methods and neural network accelerators for executing a dynamic neural network.

Neural networks are often expensive to implement in terms of computation, bandwidth and power. Accordingly, neural network accelerators (NNAs) have been developed that allow neural networks to be implemented in an efficient manner (e.g., in a manner that requires less silicon area or less processing power).

An NNA is a hardware accelerator that is designed to accelerate the processing of a neural network. As is known to those of skill in the art, a hardware accelerator is hardware designed to perform a specific set of one or more functions more efficiently than a general processing unit, such as a central processing unit (CPU). Accordingly, in contrast to a general CPU which can be configured to perform any number of functions, an accelerator can only perform a limited set of one or more functions. NNAs comprise one or more hardware accelerators designed to accelerate one or more neural network operations. Therefore a graphics processing unit (GPU) with one or more hardware accelerators designed to accelerate one or more neural network operations can be understood to be an NNA. A neural network operation is defined herein as an operation that is used to implement all or a part of a neural network layer. A neural network layer may be implemented by one or more neural network operations. Example neural network operations include, but are not limited to, convolution operations, non-linear operations, pooling operations and normalisation operations.

An NNA may therefore comprise, for example, a convolution accelerator with one or more convolution engines which is configured to accelerate convolution operations, an activation accelerator which is configured to accelerate non-linear operations, a pooling accelerator with one or more pooling engines which is configured to accelerate pooling operations, and/or a normalisation accelerator configured to accelerate normalisation operations. It will be evident to a person of skill in the art that this is just an example set of accelerators that an NNA may have, and NNAs may have additional accelerators, fewer accelerators or a different combination of accelerators. NNAs may also have other components such as, but not limited to, interconnection hardware that connects the accelerators, a command decoder (which may also be referred to as a controller) which controls the operation of the other components (e.g. hardware accelerators) in response to a set of commands etc.

NNAs may be configured to execute a neural network over one or more hardware passes of the NNA. A hardware pass of the NNA is defined herein as performing some processing using one or more components (e.g. accelerators) of the NNA to generate processed data. The processed data of a hardware pass may be output from the NNA to memory, or stored in the NNA for use in a subsequent hardware pass. The memory which is used to store the processed data of a hardware pass may be memory that is external to the NNA, but is internal to the chip on which the NNA is situated (i.e., on-chip memory), or memory that is external to the NNA and is external to the chip on which the NNA is situated (i.e., off-chip memory).

NNAs may have hardware constraints (e.g., the size of buffers, number of convolution engines, number of pooling engines) that limit the processing that can be performed in a hardware pass, or the order in which, or number of times that, a hardware pass can use components (e.g. hardware accelerators) of the NNA. Where all of the processing to implement a neural network cannot be completed in a single hardware pass of the NNA, the processing may have to be split into multiple hardware passes of the NNA.

In some examples, the hardware passes to perform or implement a pass of a neural network may be identified by first mapping each layer of the neural network to a sequence of one or more low level layers, wherein a low level layer is a set of one or more operations that can be performed by a single component (e.g. accelerator) of the neural network accelerator. In other words, each low level layer corresponds to a component (e.g. hardware accelerator) of the neural network accelerator.

Once the layers of the neural network have been mapped to low level layers, the low level layers may be divided into one or more layer groups, wherein each layer group comprises a sequence of one or more low level layers that can be implemented on the NNA. The sequences of lower level layers that can be implemented by the NNA depend on the components (e.g. hardware accelerators etc.) of the NNA and how they can be connected to process data. For example, if an NNA comprises a convolution accelerator and a pooling accelerator that can be connected to form a pipeline, the NNA can perform convolution operations and pooling operations in the same hardware pass. This means that a layer group may comprise a low level convolution layer followed by a low level pooling layer. Since each low level layer corresponds to a component of the NNA, each layer group comprises a sequence of components (e.g. hardware accelerators) that can be implemented by the NNA.

Once the low level layers have been split into one or more layer groups, it is determined, for each layer group, whether that layer group can be implemented in a single hardware pass of the NNA. Specifically, depending on the NNA hardware constraints, it may not be possible to perform all of the processing associated with a layer group in the same hardware pass. For example, the input tensor to the first layer of the layer group may be too large to be processed in a single hardware pass. Accordingly, if it is determined that a layer group cannot be implemented in a single hardware pass of the neural network that layer group is divided into a plurality of hardware passes. An example method for identifying hardware passes to implement a pass of a neural network is described in the Applicant's UK patent application no. 2209584.8, which is herein incorporated by reference in its entirety.

Once a neural network has been mapped to a set of hardware passes, commands are generated for each hardware pass that cause the neural network to implement that hardware pass. The commands for a hardware pass may comprise, for example, information that identifies the components (e.g. hardware accelerators) that are active in the hardware pass, how the active components are to be configured, the format of one or more data sets used in the hardware pass etc. The commands for all the hardware passes to implement the neural network form a command stream for the neural network which, when processed by the command decoder, cause the NNAto execute the entire neural network. For a static neural network the command stream may be loaded into memory accessible by the NNA (e.g. by a host (e.g. CPU) controlling the NNA) and the command decoder (e.g. controller) of the NNA may be provided with the address of the start of the command stream. The command decoder may then process the commands from start to finish for a first set of input data to the neural network (e.g. for a first inference or first pass), and then process those same commands for the next set of input data to the neural network (for the next inference or the next pass) etc. This allows the NNA to iteratively execute the neural network (e.g. iteratively perform inferences or passes) without intervention from the host (e.g. CPU).

As described above, for a dynamic neural network there are points in the neural network where a decision is made as to which part of the neural network is to be executed next. The hardware accelerators of most NNAs are not capable of performing the processing necessary to determine which part of the neural network is to be executed next. Accordingly, known methods for implementing a dynamic neural network on such NNAs, which is not admission that such methods are known outside of the Applicant company or are well-known, comprise grouping the hardware passes of the dynamic neural network into segments which can be executed by an NNA without intervention from the host (e.g. CPU), creating a separate command stream for each segment, and having the host (e.g. CPU) cause the NNA to execute the appropriate segment command stream at the appropriate time. This means that after the NNA executes or processes a segment command stream the NNA has to wait for the host (e.g. CPU) to (i) determine what segment command stream is to be executed next and (ii) notify the NNA of the next segment command stream. This also means that the host (e.g. CPU) has to constantly monitor the status of the NNA and make decisions on what segment is to be executed next. Accordingly, this is not a very efficient means of implementing a dynamic neural network on an NNA.

However, new NNAs have recently been developed that have, in addition to one or more hardware accelerators to accelerate one or more neural network operations, an embedded processor which can perform more complicated and more varied operations than the hardware accelerators. Specifically, the embedded processor may be able to execute one of a plurality of pre-configured programs. In some cases, the embedded processor may take the form of a micro-controller. The term micro-controller is used herein to mean a small and low-cost micro-computer which is designed to perform one or more tasks or operations within an embedded system. A micro-controller comprises at least a processor, memory and one or more input/output (I/O) ports which can be used to connect the micro-controller to other components of the system.

The inventor has determined that a dynamic neural network can be efficiently executed on an NNA with an embedded processor by using the embedded processor to dynamically determine which segment command stream is to be executed next. Specifically, this is accomplished by adding a hardware feedback path between the embedded processor and the command decoder, and configuring the command decoder to process a new set of commands, which will be referred to as branch commands, that indicate to the command decoder that it is time to branch or jump to another command stream. The branch may be an unconditional branch (e.g. the next command stream to be processed may be predetermined) or may be a conditional branch (e.g., the next command stream to be processed may not be predetermined). Then, when the command decoder processes a set of one or more branch commands the command decoder determines whether the branch is an unconditional branch or a conditional branch. If the branch is a conditional branch, the command decoder causes the embedded processor to determine the next command stream and notify the command decoder of the next command stream via the hardware feedback path. Once the next command stream has been identified, either because it was predetermined or has been identified by the embedded processor, the command decoder starts processing or executing the commands of the next command stream. Where each command stream comprises commands for one or more hardware passes of the neural network accelerator, the one or more branch commands may be in the form of a new type of hardware pass, which may be referred to as a branch hardware pass.

To execute a dynamic neural network on such a neural network accelerator, the operations of the dynamic neural network are grouped into segments (e.g. a set of hardware passes) which can be executed on the neural network, and a command stream is generated for each segment (e.g. set of hardware passes) which causes the neural network accelerator to perform the operations of that segment. A set of one or more branch commands are added to the end of each segment command stream (e.g. in the form of a branch hardware pass), except the last segment command stream, that causes the command decoder to branch or jump to the next segment command stream by either, branching or jumping to a predetermined command stream identified in the one or more branch commands, or causing the embedded processor to determine which command stream is to be processed next according to one or more criteria and/or one or more conditions. The command stream for each segment may be loaded into memory accessible by the neural network accelerator, and the starting address of the command stream for the first segment is provided to the command decoder. The command decoder may then start processing the commands at that address in order. This allows the complete dynamic neural network to be executed on the neural network accelerator without host (e.g. CPU) intervention. This allows a dynamic neural network to be executed in a much more hardware efficient manner.

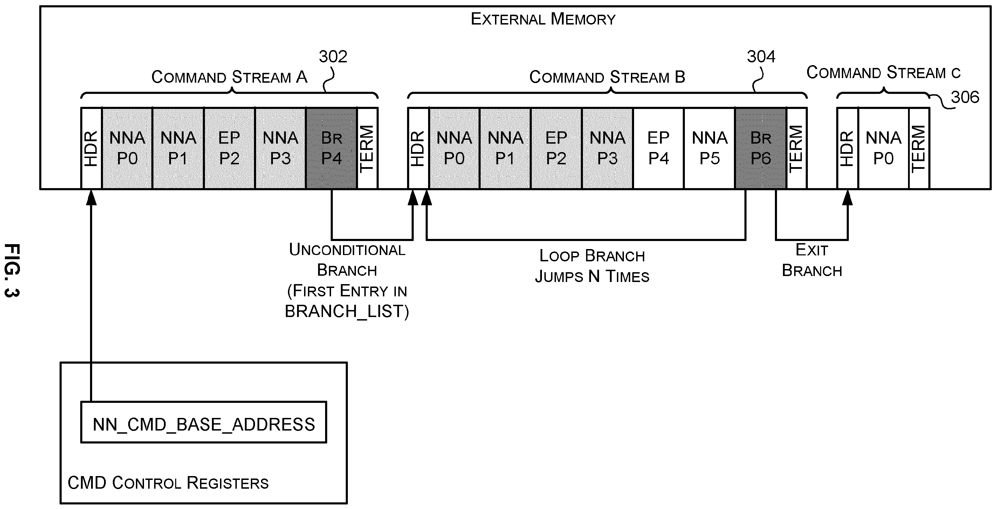

For example, reference is now made to FIG. 3 which illustrates an example set of command streams for executing an example dynamic neural network using a neural network accelerator that comprises one or more hardware accelerators, an embedded processor and a command decoder that is configured to control the operation of the one or more hardware accelerators and the embedded processor in accordance with commands of a command stream, including branch commands. In this example, the operations of the example dynamic neural network have been divided into operations hardware passes, and the operations hardware passes have been grouped into segments. The phrase "operations hardware pass" is used herein to mean a hardware pass which is used to implement one or more operations and does not include branch commands. Operations hardware passes can be distinguished from branch hardware passes which comprise branch commands which cause the command decoder to branch or jump to a next command stream. In this example, there are two types of operations hardware passes, an NNA hardware pass in which one or more of the hardware accelerators of the neural network accelerator are used to perform one or more operations, and an embedded processor (EP) hardware pass in which the embedded processor is used to perform one or more operations.

In the example of FIG. 3, operations hardware passes (e.g. NNA and EP hardware passes) have been identified for the example dynamic neural network, and the operations hardware passes have been grouped into three segments - segments A, B and C. The first segment comprises four operations hardware passes numbered P0 to P3. The first, second and fourth operations hardware passes (P0, P1 and P3) are NNA hardware passes and the third operations hardware pass is an embedded processor (EP) hardware pass. The second segment comprises six operations hardware passes numbered P0 to P5 wherein P0 to P3 are the same hardware passes that were in the first segment. The fifth and sixth operations hardware passes (P4 and P5) are embedded processor (EP) and NNA hardware passes respectively. The third segment comprises only a single operations hardware pass - an NNA hardware pass.

A command stream 302, 304, 306 has been generated for each segment that comprises a set of commands for each operations hardware pass in that segment that, when processed by the command decoder, causes the neural network accelerator to perform a set of one or more desired operations. Specifically, command stream A 302 has been generated for segment A, command stream B 304 has been generated for segment B, and command stream C 306 has been generated for segment C.

A set of one or more branch commands to implement a branch hardware pass have been added to command streams A and B 302, 304 respectively which cause the command decoder to, once it has processed the commands for the operations hardware passes in that command stream, jump to the next command stream. Specifically, one or more branch commands to implement branch (BR) hardware pass P4 have been added to command stream A 302, and one or more branch commands to implement a branch (BR) hardware pass P6 have been added to command stream B 304. A branch hardware pass may implement an unconditional branch (the next command stream is predetermined) or a conditional branch (where the next command stream is not predetermined and is based on one or more conditions or criteria).

In this example, the set of one or more branch commands to implement the branch (BR) hardware pass P4 in command stream A 302 cause the command decoder to implement an unconditional branch to command stream B 304. When the command decoder (e.g. controller) of the NNA processes such a set of branch commands it causes the command decoder to branch or jump to (i.e., start processing) the commands in command stream B 304. An unconditional branch is used in this example because it is known, or predetermined, that after executing command stream A 302 that command stream B 304 is to be executed. Thus, no criteria need to be assessed or analysed to determine where to branch to.

The set of one or more branch commands to implement the branch (BR) hardware pass P6 in command stream B 304 cause the command decoder (e.g. controller) of the NNA to implement a conditional branch in which the embedded processor is used to determine which command stream is to be processed next. In this example, the command decoder causes the embedded processor to determine how many times command stream B 304 has been processed (or executed), and if it is less than N, notify the command decoder that command stream B 304 is to be processed again, and if it is equal to N, notify the command decoder that command stream C 306 is to be processed.

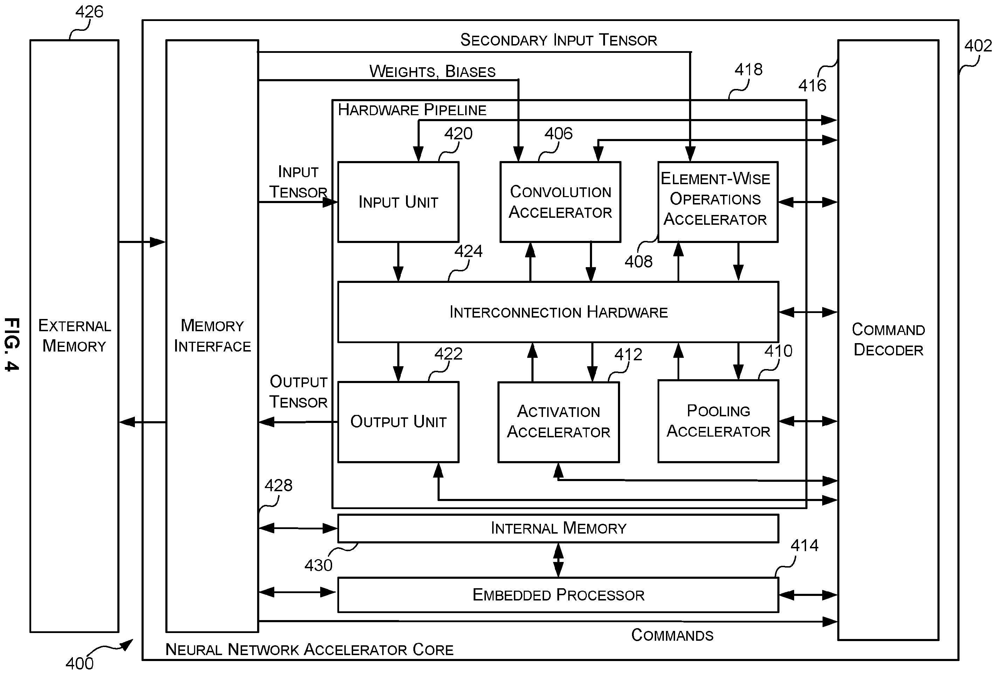

Reference is now made to FIG. 4 which illustrates an example neural network accelerator 400 which can execute a dynamic neural network. The neural network accelerator 400 comprises one or more neural network accelerator cores 402. Each neural network accelerator core 402 comprises one or more hardware accelerators 406, 408, 410, 412 which are each configured to accelerate one or more neural network operations, an embedded processor 414, and a command decoder 416 that is configured to control the operation of the hardware accelerators 406, 408, 410, 412 and the embedded processor 414 in accordance with commands that form a command stream, including branch commands.

In the example of FIG. 4 the hardware accelerators 406, 408, 410, 412 form part of a hardware pipeline 418 that also comprises an input unit 420, an output unit 422 and interconnection hardware 424. The hardware pipeline 418 is configured to receive input data (an input tensor), process the input data (input tensor) using one or more of the hardware accelerators 406, 408, 410, 412 to generate output data (an output tensor), and output the output data (output tensor). The input data (input tensor) may represent all or a portion of the input data to a layer of a neural network. The processing of a set of input data using one or more hardware accelerators 406, 408, 410, 412 is referred to herein as a hardware pass of the hardware pipeline or an NNA hardware pass. One or more hardware passes of the hardware pipeline may be used to implement a neural network. Different hardware accelerators may be used in different hardware passes of the hardware pipeline. For example, in a first hardware pass input data may be processed by the convolution accelerator 406, and in a second hardware pass input data may be processed by the pooling accelerator 410 and the element-wise operations accelerator 408.

The input unit 420 is hardware configured to receive and store input data to the hardware pipeline 418. The input data may be received from external memory 426 (i.e., memory external to the NNA 400) via a memory interface 428. In some examples, the input unit 420 may comprise one or more buffers to store the received input data. Although the example hardware pipeline 418 of FIG. 4 comprises a single input unit 420, other example hardware pipelines may comprise multiple input units. The term "input data to the hardware pipeline" is used herein to mean the input data to be processed by one or more hardware accelerators (which may or may not be equivalent to the input data to a layer of a neural network) and may be distinguished from other parameters used in a neural network such as weights, biases, etc. In some cases, the other input parameters may be input to the hardware pipeline in another manner (e.g. loaded into an internal or external storage unit associated with a specific hardware accelerator). For example, the weights and biases for a convolution layer may be loaded into a buffer linked to, or forming part of, the convolution accelerator 406.

Each hardware accelerator 406, 408, 410, 412, is configured to accelerate one or more neural network operations. Specifically, each hardware accelerator 406, 408, 410, 412 is configured to receive an input tensor and perform, via hardware logic, one or more operations on the input tensor to generate an output tensor. The hardware pipeline 418 of FIG. 4 comprises a convolution accelerator 406, an element-wise operations accelerator 408, a pooling accelerator 410 and an activation accelerator 412. However, this is just an example set of hardware accelerators and other neural network accelerators may have additional hardware accelerators, fewer hardware accelerators and/or different hardware accelerators depending, for example, on the type of neural networks they are intended to process. In some cases, one or more of the hardware accelerators of FIG. 4 may be combined.

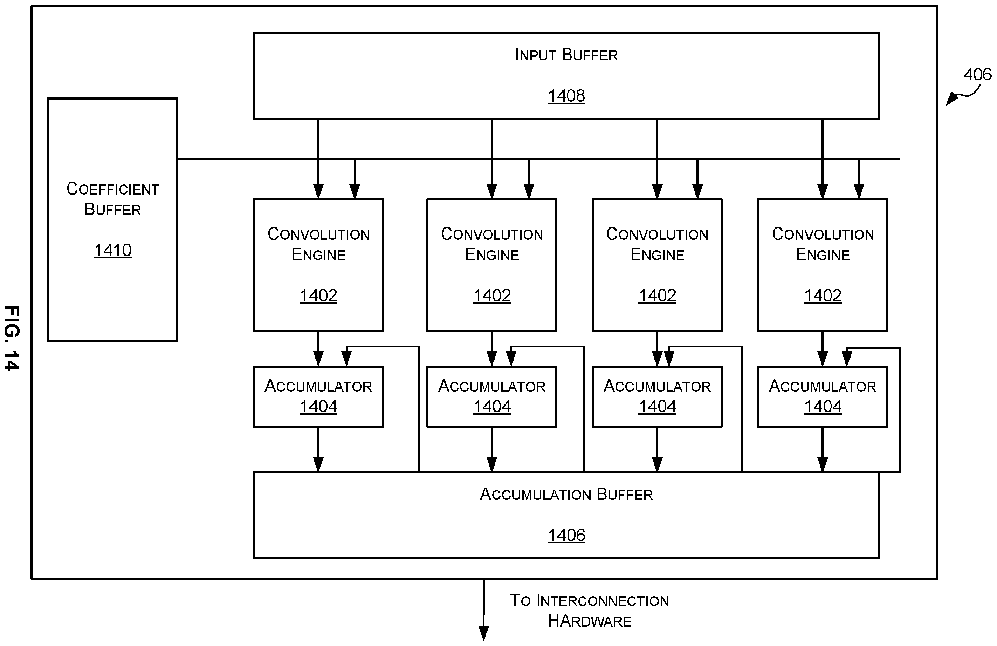

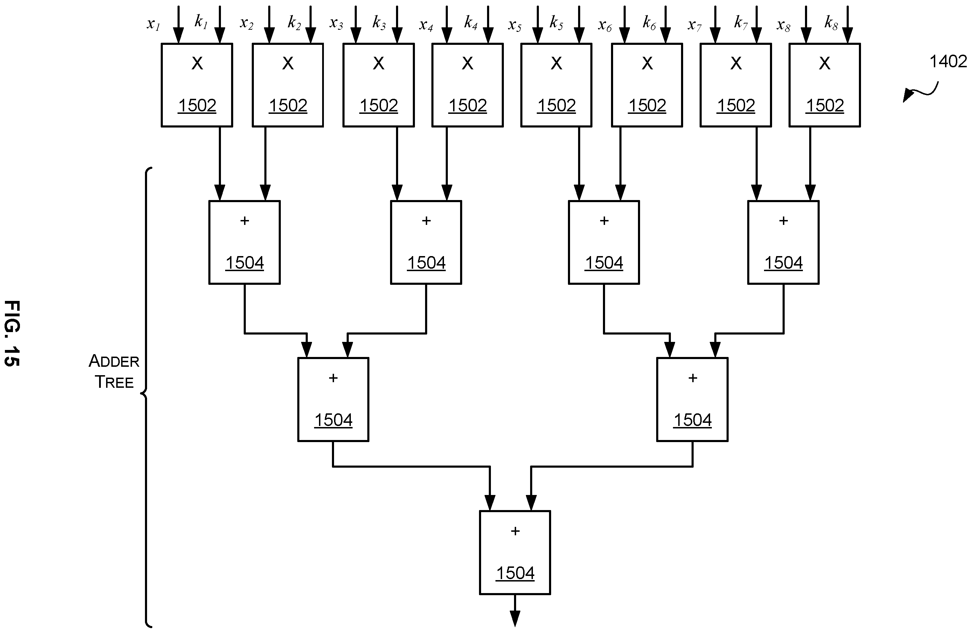

The convolution accelerator 406 is hardware configured to accelerate convolution operations. An example implementation of a convolution accelerator 406 is described with respect to FIGS. 14 and 15.

The element-wise operations accelerator 408 is hardware configured to receive input data (e.g. an input tensor) and perform an element-wise operation on the input data (e.g. input tensor), optionally with another data set (e.g. another tensor which may be referred to as the secondary input tensor) which may be obtained or retrieved from external memory 426 (e.g. memory external to the NNA) via the memory interface 428. An element-wise operation is a same operation that is performed on each element of the input data/tensor (e.g. each input data value or each tensel). Element-wise operations which may be performed on the input data include, but are not limited to, add, multiply, maximum, and minimum.

The other data set/tensor may be the same size (e.g. have the same dimensions) as the input data/tensor such that corresponding elements of the two tensors are combined using an element-wise operation. Alternatively, the other data set/tensor and the input data/tensor may have a different size or dimensions. If, for example, the mismatching dimension of one of the tensors is of size 1, an element-wise operation may be performed between the input data/tensor and the other data set/tensor using a broadcast technique wherein the smaller tensor is broadcast (or expanded) to the size of the other tensor. For example, a tensor of size [N, H, W, C] = [1, 10, 1, 10] can be combined element-wise with a tensor of size [N, H, W, C] = [1, 10, 10, 10] by expanding the W dimension of the first tensor.

The pooling accelerator 410 is hardware configured to accelerate pooling operations such as, but not limited to, max, min and average. The activation accelerator 412 is hardware configured to accelerate non-linear operations such as, but not limited to, ReLU and LReLU.

The output unit 422 is hardware configured to receive the output tensor generated by processing the input data via one or more hardware accelerators 406, 408, 410, 412. In some cases, the output unit 422 may have a buffer or other storage for temporarily storing all or a portion the output tensor prior to outputting the output tensor from the hardware pipeline 418. In some cases, the output unit 422 may be configured to save the output tensor in external memory 426 (i.e., memory that is external to the neural network accelerator) via the memory interface 428.

The interconnection hardware 424 statically or dynamically connects the input unit 420, one or more hardware accelerators 406, 408, 410, 412, and the output unit 422 to allow input data to flow through (e.g. be processed by) one or more hardware accelerators and then be output from the hardware pipeline 418. In some cases, the interconnection hardware 424 may comprise fixed hardware connections between the input unit 420, the hardware accelerators 406, 408, 410, 412 and the output unit 422 that allow data to flow through the input unit 420, the hardware accelerators 406, 408, 410, 412 to the output unit 422 in a limited number of ways. However, in other cases, the interconnection hardware 424 may comprise hardware that can dynamically connect the input unit 420, the hardware accelerators 406, 408, 410, 412 and the output unit 422 in a plurality of different ways in response to one or more control signals.

For example, the interconnection hardware 424 may comprise a crossbar and the input unit 420, the hardware accelerators 406, 408, 410, 412 and the output unit 422 may be connected to the crossbar in such a manner that the crossbar can dynamically connect the input unit 420, the hardware accelerators 406, 408, 410, 412 and the output unit 422 in a plurality of different ways in response to one or more control signals. For example, in one hardware pass of the hardware pipeline 418 the crossbar may connect the output of the input unit 420 to the input of the convolution accelerator 406, connect the output of the convolution accelerator 406 to the input of the element-wise operations accelerator 408, and then connect the output of the element-wise operations accelerator 408 to the input of the output unit 422 so that the input data for the hardware pass is processed by the convolution accelerator 406 then the element-wise operations accelerator 408. In another hardware pass, the crossbar may connect the output of the input unit 420 to the input of the convolution accelerator 406, and the output of the convolution accelerator 406 to the input of the output unit 422 so that the input data for the hardware pass is processed only by the convolution accelerator 406. Accordingly, in these cases the connections between the input unit 420, the hardware accelerators 406, 408, 410, 412 and the output unit 422 (and thus the manner in which data may flow through the input unit 420, the hardware accelerators 406, 408, 410, 412 and the output unit 422) are not fixed or static.

The embedded processor 414 can execute programs or functions. In some cases, the embedded processor 414 may be a micro-controller. The programs or functions which the embedded processor 414 can execute may be stored in internal memory 430. In some cases, the embedded processor can execute programs or functions that cause the embedded processor 414 to perform operations on data input to the embedded processor 414. The embedded processor 414 may be able to receive data from external memory 426 via the memory interface 428 or from the hardware pipeline 418 via internal paths. For example, in some cases, the output unit 422 of the hardware pipeline 418 may be able to write data to internal memory 430 of the NNA, via the memory interface 428, which the embedded processor has access to. There is a hardware feedback path between the embedded processor 414 and the command decoder 416 which enables the embedded processor 414 to control the operation of the command decoder 416 and specifically, to control which command stream the command decoder 416 is to process next. The hardware feedback path is a set of one or more hardware components that enable the embedded processor to control which command stream the command decoder 416 is to process next. As described in more detail below, in some examples, the hardware feedback path may comprise a set of registers and/or set of interfaces situated between the embedded processor 414 and the command decoder 416 which allow the embedded processor 414 to notify the command decoder 416 of which command stream the command decoder 416 is to process next. However, in other examples, the hardware feedback path may take a different form. In the example shown in FIG. 4 the embedded processor 414 is separate from the hardware pipeline, however, in other examples, the embedded processor 414 may form part of the hardware pipeline 418. For example, in other examples, the embedded processor 414 may be connected to the interconnection hardware 424.

The command decoder 416 controls the operation of the other components of the NNA core 402 in accordance with a set of commands that form a command stream.

The example neural network accelerator 400 of FIG. 4 is configured to execute a neural network in one or more hardware passes of an NNA core 402. A hardware pass of an NNA core 402 is the use of one or more components of the NNA core to perform some processing. A hardware pass which is used to perform one or more operations on an input tensor is defined herein as an operations hardware pass. In this example NNA there are two types of operations hardware passes, an NNA hardware pass in which the hardware pipeline 418 is used to perform one or more operations on input data (e.g. an input tensor) and an embedded processor (EP) hardware pass in which the embedded processor 414 is used to perform one or more operations on input data (e.g. an input tensor). The operations of a neural network may be mapped to operations hardware passes in any suitable manner. In addition to being able to implement operations hardware passes, the command decoder 416 can implement a special type of hardware pass, referred to as a branch hardware pass, in which the command decoder jumps or branches to a new command stream.

A command stream thus comprises commands to implement one or more hardware passes. The commands for each operations hardware pass may indicate which input data is to be processed in that hardware pass, which components are to process the input data, how those components are to process the input data, and where the output data is to be stored. Then, for each operations hardware pass, the command decoder 416 sends commands or control information to the appropriate components of the NNA core so that the identified input data will be processed using the desired components in the desired manner.

For example, the commands for an NNA hardware pass may identify which of the hardware accelerators 406, 408, 410 and 412 of the hardware pipeline 418 are to be active (i.e., used) in that hardware pass and what operations they are to perform. The command decoder 416 may then be configured to, in response to processing commands for an NNA hardware pass, (i) send command or control information to the interconnection hardware 424 indicating which accelerators are to be active or used in the hardware pass which causes the interconnection hardware 424 to connect the input unit 420, the active accelerators 406, 408, 410 and/or 412, and the output unit 422 in the desired manner, and (ii) send information to each active hardware accelerator indicating that it is to be active in the hardware pass and how it should be configured in that hardware pass which causes the hardware accelerator to perform a desired operation on the input data to that accelerator. The commands for an NNA hardware pass may also indicate other information, such as, but not limited to, the formats of the input and output data of the active accelerators.

The commands for an EP hardware pass may identify what program or function the embedded processor is to execute and what input data it is to process. The command decoder 416 may then be configured to, in response to processing commands for an EP hardware pass, cause the embedded processor 414 to execute the identified program using the identified input data.

The commands for a branch hardware pass may comprise one or more branch commands which notify the command decoder 416 that it is to branch to (i.e., start processing) another command stream. The command decoder 416 may support both unconditional branching and conditional branching. In such cases, the commands for a branch hardware pass may indicate whether the branch is a conditional branch or an unconditional branch. In unconditional branching the next command stream to be processed is known or predetermined. Accordingly, when the branch is an unconditional branch, the branch commands may identify the next command stream to be processed. In such cases, when the command decoder 416 processes a set of one or more branch commands which notify the command decoder that an unconditional branch is to be taken to a particular command stream, the command decoder 416 may be configured to start processing the particular command stream.

In contrast, in conditional branching the next command stream to be executed is not fixed or predetermined but is based on one or more conditions or criteria. The command decoder 416 is configured to, when it processes a set of one or more branch commands that indicate that a conditional branch is to be taken, cause the embedded processor 414 to determine which command stream is to be processed next. As described above, the embedded processor is configured to execute programs or functions. Accordingly, when the branch is a conditional branch, the branch commands may identify a program or function that the embedded processor is to execute which causes the embedded processor 414 to determine, using the desired criteria and/or conditions, which command stream is to be processed and to notify the command decoder 416 of the determined command stream via the hardware feedback path. Once the command decoder 416 has been notified by the embedded processor 414 of the command stream to process next, the command decoder 416 may be configured to start processing that command stream.

### Command Decoder and Embedded Processor

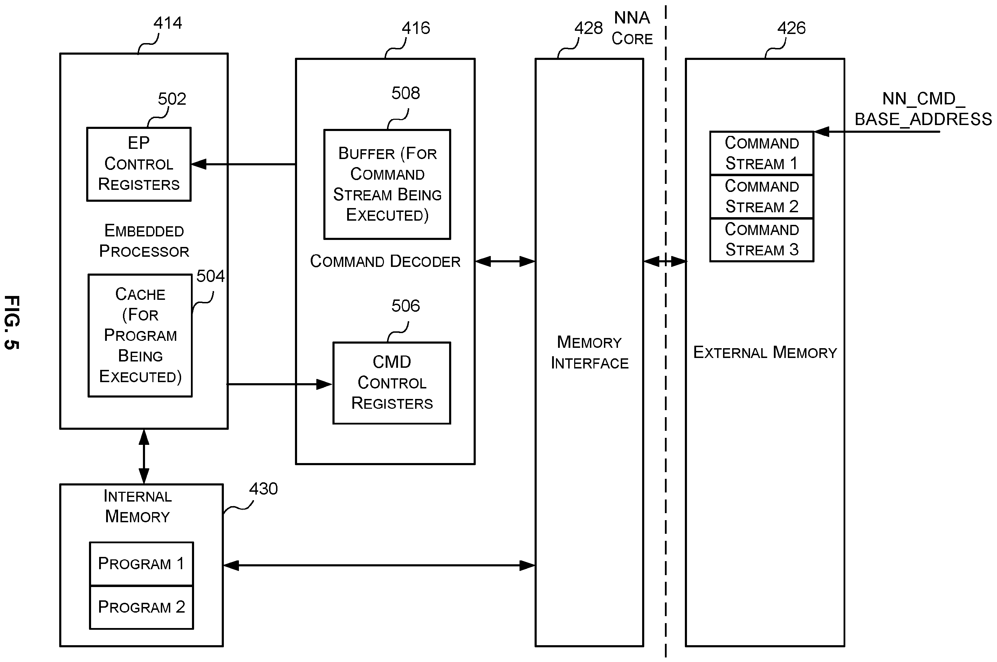

Reference is now made to FIG. 5 which illustrates example implementations of the embedded processor 414 and the command decoder 416 of FIG. 4.

As described above, the command decoder 416 is configured to, when it processes a set of branch commands, of a command stream, that indicate that the command decoder 416 is to branch to, or jump to, another command stream and the other command stream is not known (e.g. it is a conditional branch), cause the embedded processor 414 to identify the command stream that is to be processed or executed next using desired criteria and/or conditions and notify the command decoder 416 of the identified command stream via the hardware feedback path. As described above, the embedded processor 414 is configured to execute programs or functions. Accordingly, in some cases, the command decoder 416 may be configured to cause the embedded processor 414 to identify which command stream is to be executed next by causing the embedded processor 414 to execute a specific program or function that is designed to assess the desired criteria and/or conditions, select a command stream based on the assessment, and notify the command decoder 416 of the selected command stream. The command decoder 416 may be able to cause the embedded processor 414 to execute a specific program or function by notifying the embedded processor 414 that it is to execute a program or function, and providing the embedded processor 414 with information that identifies the program or function. In some cases, the embedded processor 414 may be able to execute one of a plurality of pre-compiled programs or functions each of which can be uniquely identified by an index. In these cases, the information identifying a program or function may comprise an index associated with the program or function. In some cases, in addition to identifying the program or function that the embedded processor 414 is to execute the command decoder 416 may be able to provide the embedded processor 414 with parameters or arguments which are to be used in executing the identified program or function.

In some cases, the NNA core 402 may comprise a plurality of embedded processor (EP) control registers 502 that control the operation of the embedded processor 414. In such cases, the embedded processor 414 may be configured to monitor the EP control registers 502 and operate in accordance with the information in the EP control registers 502. For example, the embedded processor 414 may be configured to read, and operate in accordance with, certain registers in response to an interrupt. In some cases, as shown in FIG. 5, the EP control registers 502 may form part of the embedded processor 414. However, in other cases the EP control registers 502 may be internal to the NNA core, but external to the embedded processor 414; or some of the EP control registers may be external to the embedded processor 414 and other EP control registers may form part of the embedded processor 414. Where the NNA comprises EP control registers 502, the command decoder 416 may be configured to cause the embedded processor 414 to execute a specific program or function by writing the information (e.g. index) identifying the program or function to be executed to one or more of the EP control registers 502, optionally, writing any parameters or arguments to one or more of the EP control registers 502, and notifying the embedded processor that a new program or function is to be executed. The notification may cause the embedded processor to read the relevant EP control registers and execute the program or function identified thereby. The command decoder may be configured to notify the embedded processor by raising an interrupt, which may be referred to as a start interrupt.

Table 1 lists an example set of EP control registers 502 which the command decoder 416 may be able to write to, to control the operation of the embedded processor 414. It will be evident to a person of skill in the art that this is an example set of EP control registers and that in other examples there may be additional registers, fewer registers and/or different registers.

**Table 1**

| Name | Bits | Description | Location/Connection of Register |
|---|---|---|---|
| EP_OPERATION_CTRL | | | |
| OPERATION_IDX | 12 | Bits 11..0 | In Register Bank which is accessible via register interface |
| | | Holds an index that the embedded processor uses to select which program/function to execute in response to an interrupt signal IRT_EP_OP_START | |
| EXECUTION_CONFIG | 3 | Bit 12: if 1, it is an initialisation command | In Register Bank which is accessible via register interface |
| | | Bit 13: if 1, power off after operation completion | |
| | | Bit 14: if 1, sleep enabled | |

| EP_ARG0 | | | |
|---|---|---|---|
| REG | 32 | Additional argument field 8. The meaning of the data in this field is interpreted by the program/function that is executed. | In Register Bank which is accessible via register interface |
| | | Could contain an address to the Static Parameters Block (SPB) which comprises the arguments for the program/function. | |

| EP_ARG1 | | | |
|---|---|---|---|
| REG | 32 | Additional argument field 1. The meaning of the data in this field is interpreted by the program/function that is executed. | In Register Bank which is accessible via register interface |

| EP_RESET_VECTOR | | | |
|---|---|---|---|
| REG | 32 | The address of a program the embedded processor is to execute when coming out of a reset, to start initialisation. | Directly wired to embedded processor |

For the example set of EP control registers 502 in Table 1, the command decoder 416 may cause the embedded processor 414 to execute a specific program or function by writing an index of the program to the EP OPERATION CTRL.OPERATION_IDX register, optionally, writing any arguments/parameters or the address of any arguments/parameters to the EP_ARG0 register and/or the EP_ARG1 register, and notifying the embedded processor (e.g. via an interrupt) that a new program or function is to be executed by the embedded processor. The notification causes the embedded processor to read the registers in Table 1 to identify the function or program to be executed next and execute the identified function or program.

In some cases, the instructions or code forming the programs or functions that the embedded processor 414 can execute are stored in memory accessible to the embedded processor 414. In some cases, the memory storing the instructions or code forming the programs or functions that the embedded processor 414 can execute may be internal to the embedded processor 414. In other cases, the memory storing the instructions or code forming the programs or functions that the embedded processor 414 can execute may be internal to the NNA core, but external to the embedded processor. For example, as shown in FIG. 5, the instructions or code forming the programs or functions that the embedded processor can execute may be stored in internal memory 430 of the NNA core 402. Where the memory storing the instructions or code forming the programs or functions that the embedded processor 414 can execute is external to the embedded processor 414, the embedded processor 414 may comprise internal storage, such as, but not limited to a cache 504, which the embedded processor 414 may use to temporarily store at least a portion of the instructions or code of the program or function the embedded processor 414 is executing to mask the latency related to retrieving the instructions or code from the internal memory 430.

As described above, the embedded processor 414 is configured to, once it has identified the next command stream to be processed by the command decoder, notify the command decoder 416 of the identified command stream. In some cases, when the neural network accelerator is configured to execute a dynamic neural network, the command streams that form that dynamic neural network are loaded into memory (e.g. external memory 426) accessible to the neural network accelerator (and the command decoder 416 thereof). Then the command decoder 416 is provided with information identifying the address (e.g. a pointer, NN_CMD_BASE_ADDRESS) of the first command stream. This address may be referred to as the base address. The command decoder 416 then reads the commands of that command stream from memory and controls the other components of the neural network accelerator core in accordance with the commands. In such cases, the embedded processor 414 may be configured to notify the command decoder of the identified command stream by providing the command decoder 416 with information identifying the location in memory of the next command stream to be executed.

In some cases, the information identifying the location in memory of a command stream may comprise information identifying an offset with respect to the base address (e.g. NN_CMD_BASE_ADDRESS). In some cases, the information identifying an offset with respect to the base address for a command stream may comprise the value of the offset. When the information identifying the offset is the value of the offset, the command decoder 416 may be configured to generate the address of the next command stream to be processed by adding the value of the offset to the base address (e.g. NN_CMD_BASE_ADDRESS). However, in other cases, a command stream may comprise commands that define a BRANCH_TABLE with one or more entries wherein each entry comprises a unique index and an offset for a command stream. In such cases, the information identifying an offset may comprise an index to the BRANCH_TABLE. When the information identifying the offset is an index to the BRANCH_TABLE, the command decoder 416 may be configured to retrieve the offset corresponding to the identified index from the BRANCH_TABLE, and generate the address of the next command stream to be processed by adding the retrieved offset to the base address (e.g. NN_CMD_BASE_ADDRESS). The number of entries in the BRANCH_TABLE may be configurable. The BRANCH_TABLE may have a maximum number of entries, which may be 16 in one example. In yet other cases, the embedded processor 414 may be able to identify the offset in either manner (e.g. by providing the value of the offset, or by providing an index to the BRANCH_TABLE).

Having the embedded processor select and provide an index to the BRANCH_TABLE is preferable since it means that the embedded processor doesn't have to know anything about the actual address and simply has to select from one of a fixed number of options. In these cases, the embedded processor just needs to make the decision but does not need to determine the actual offset. For example, in a looping use case, you may want to keep executing the command stream identified by Index=0 until the loop exit condition is met at which point you then jump to the command stream identified by Index=1. Furthermore, as described in more detail below, having the next command stream be one of a plurality of predetermined command streams allows the command decoder to pre-fetch one or more of those predetermined command streams on the basis that one of the command streams is likely to be processed next.

Table 2 shows example command fields in a command stream which may be used to define a BRANCH_TABLE, where UNIT*x* is an *x*-bit unsigned integer, and INT*x* is an *x*-bit signed integer. Specifically, in this example, if there are Y entries in the BRANCH_TABLE there are 2Y HDR_STREAM_BRANCH_CTRL fields and two HDR_STREAM_BRANCH_CTRL fields are used to define each entry of the BRANCH_TABLE. Specifically, if the entries are numbered from 0 to Y-1, then the (2*N)^{th} and the (2*N+1)^{th} HDR_STREAM_BRANCH_CTRL fields are used to define the Nth entry. For example, HDR_STREAM_BRANCH_CTRL0 and HDR_STREAM_BRANCH_CTRL1 define the 0^{th} entry. In this example, the first of each pair of fields is used to define the LSBs of the offset and the second field of the pair is used to define the MSBs of the offset. However, this is an example only. The DISABLE_BRANCH_PREFETCH and PREFETCH_SIZE_MIN1 portions of these fields will be described below.

**Table 2**

| Command Stream Field Name | Bits | Format | Description |
|---|---|---|---|
| HDR_STREAM_CTRL2 | | | |
| NUM_BRANCH_STREAM_MIN1 | 4 | UINT4 | Number of entries in the BRANCH_TABLE. |
| | | | May range from 0 to 15 |

| HDR_STREAM_BRANCH_CTRL <2N> | | | |
|---|---|---|---|
| IDX<N>_OFFSET_LSB | 32 | UINT32 | LSBs of offset for Branch N |

| HDR_STREAM_BRANCH_CTRL <2N+1> | | | |
|---|---|---|---|
| IDX<N>_DISABLE_BRANCH_PREFETCH | 1 | Boolean | If this bit is set, pre-fetching of the command stream for Branch N is disabled |
| IDX<N>_OFFSET_MSB | 9 | INT9 | Sign and MSBs of offset for Branch N |
| IDX<N>_PREFETCH_SIZE_MIN1 | 6 | UNIT6 | Size (minus 1) of the initial pre-fetch for the command stream for Branch N |
| | | | The size may be given in units of 32-bytes. |

In some cases, the NNA core 402 may comprise a plurality of command decoder (CMD) control registers 506 that control the operation of the command decoder 416. In such cases, the command decoder 416 may be configured to monitor the CMD control registers 506 and operate in accordance with the information in the CMD control registers 506. In some cases, as shown in FIG. 5, the CMD control registers 506 may form part of the command decoder 416. However, in other cases the CMD control registers 506 may be internal to the NNA core, but external to the command decoder 416; or some of the CMD control registers 506 may be external to the command decoder 416 and other CMD control registers 506 may form part of the command decoder 416. Where the NNA core 402 comprises such CMD control registers 506 the embedded processor 414 may be configured to notify the command decoder 416 of the next command stream to be processed by writing information (e.g. information identifying an offset for generating the address of the command stream) to one or more CMD control registers 506.

Table 3 lists an example set of CMD control registers 506 which the embedded processor 414 may be able to write to, to control the operation of the command decoder 416. The purpose of some of the registers listed in Table 3 will be described in more detail below. It will be evident to a person of skill in the art that this is an example only and that in other examples fewer registers, additional registers or a completely different set of registers may be used by the embedded processor 414 to control the operation of the command decoder 416.

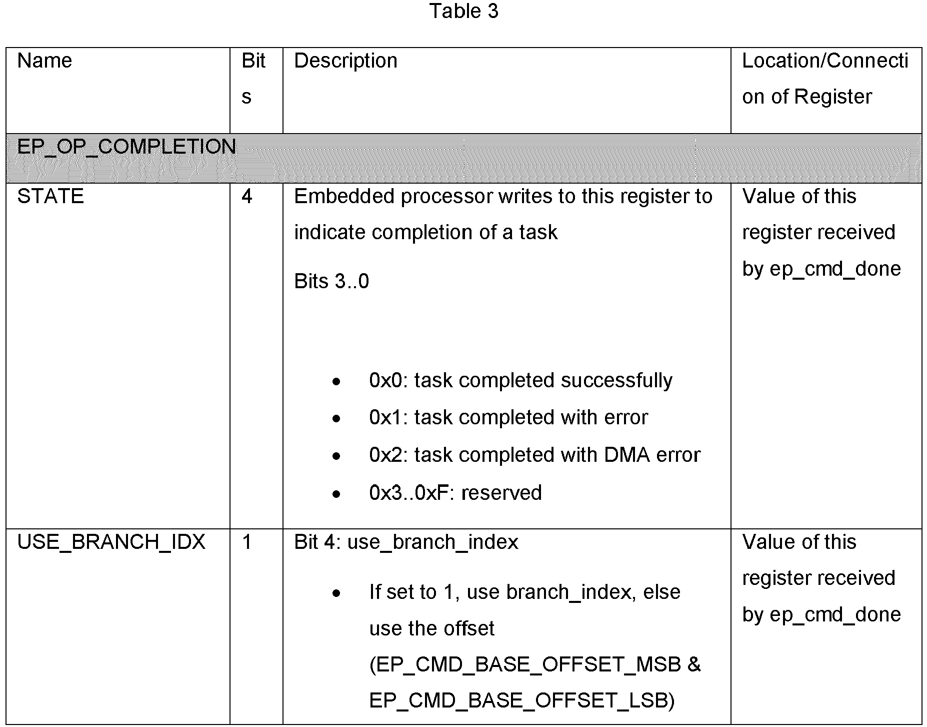

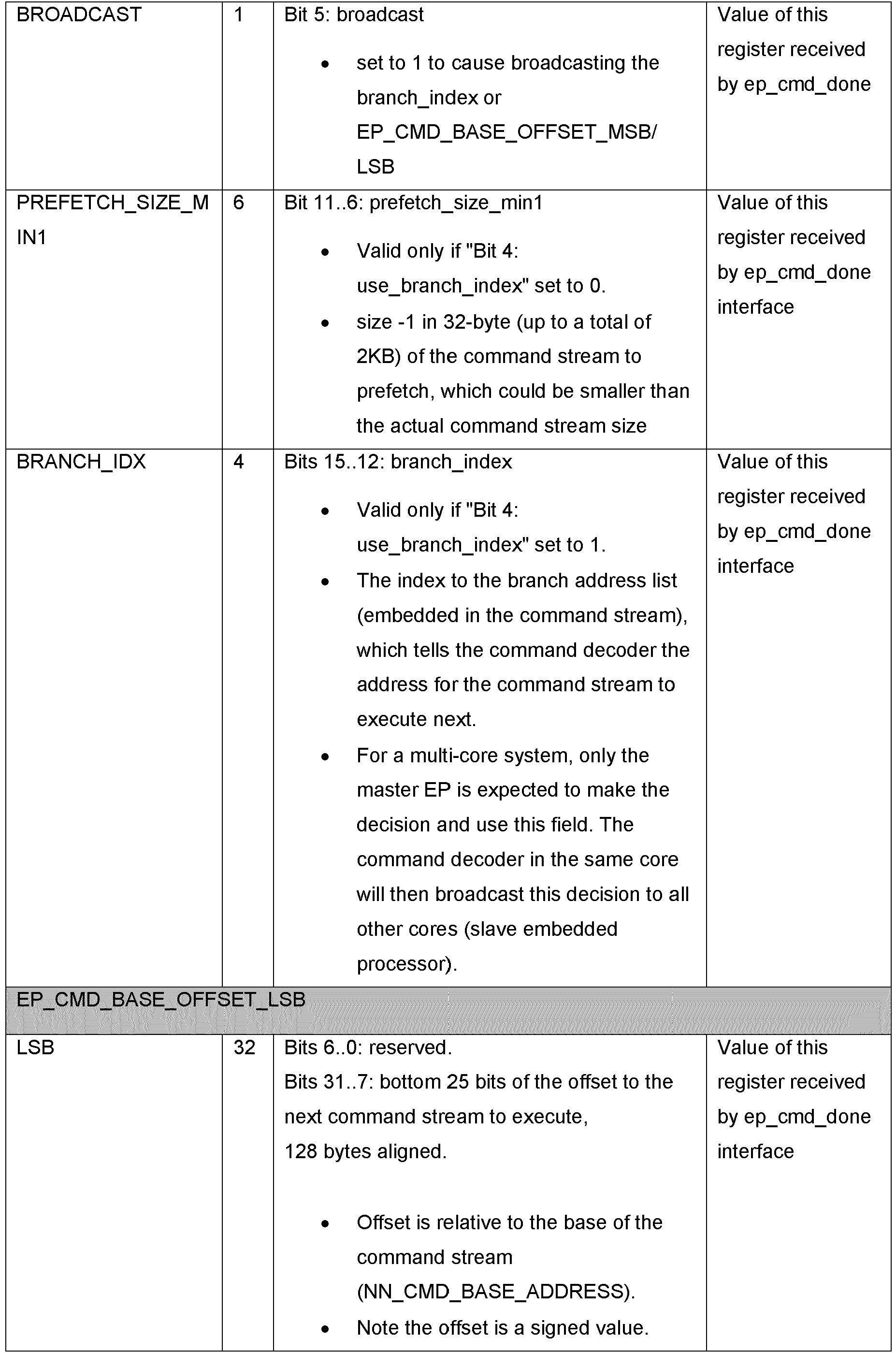

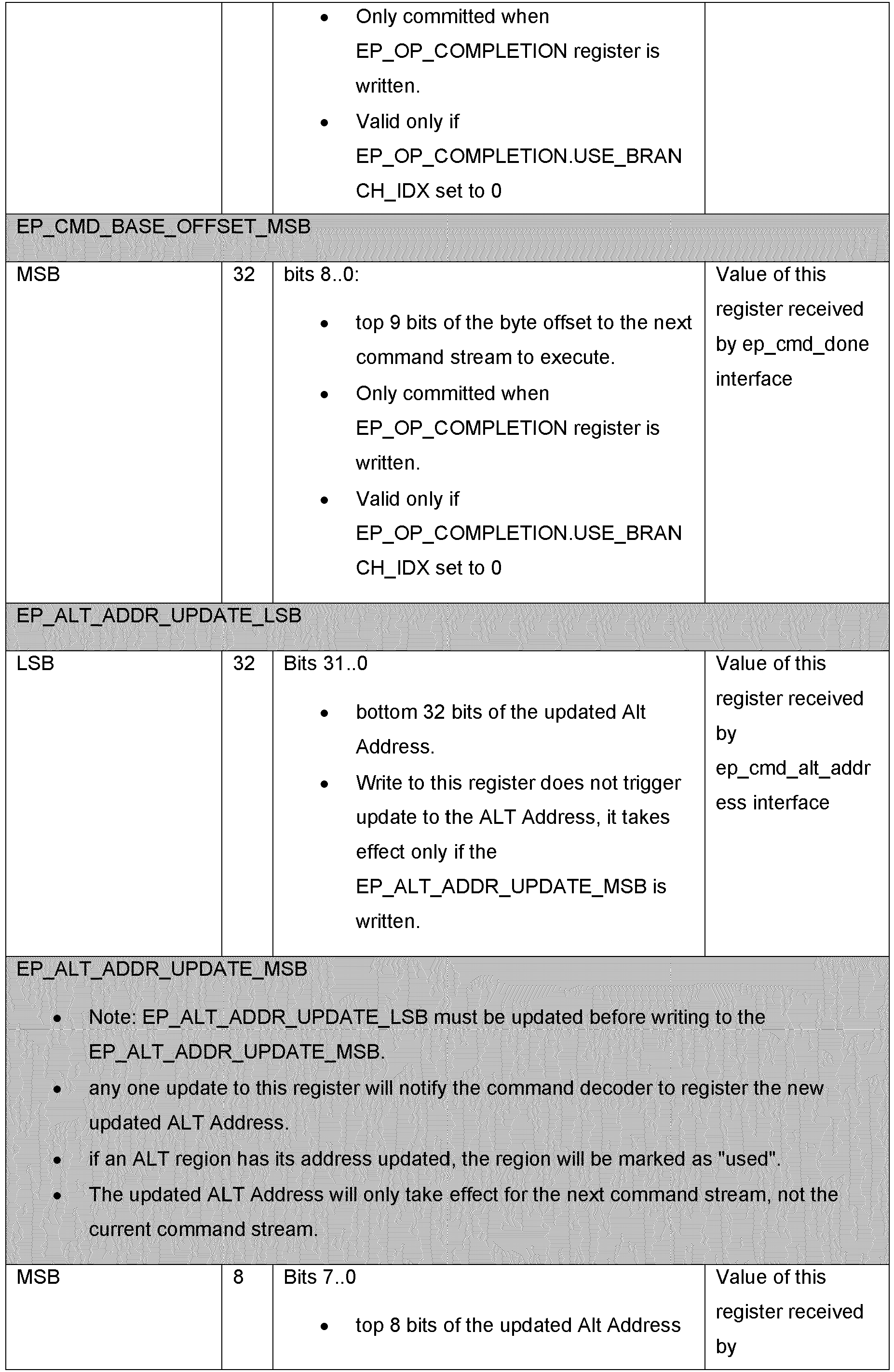

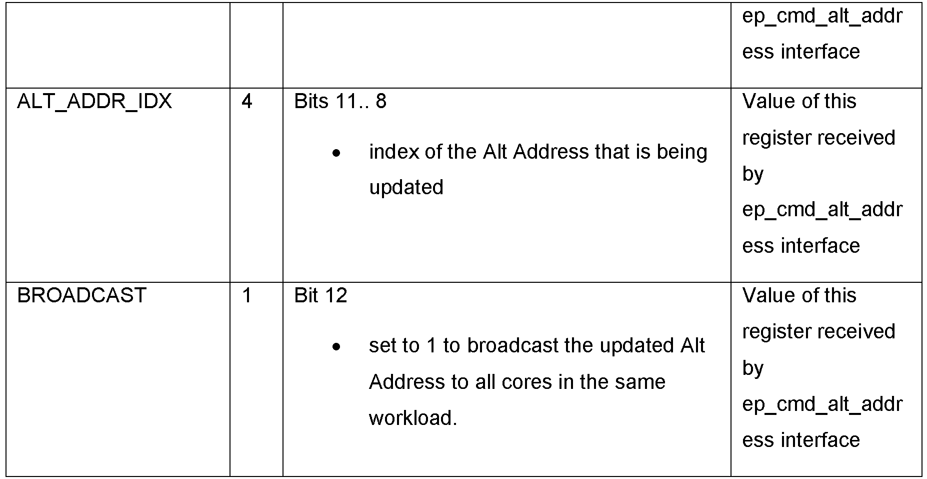

For the example set of CMD control registers 506 in Table 3, the embedded processor 414 may, once it has identified the next command stream to be processed, notify the command decoder 416 of the next command stream to be processed by (1) setting the EP_OP_COMPLETION.STATE register to 0x0 to indicate the embedded processor 414 has completed the processing to determine the next command stream, setting EP OP COMPLETION.USE_BRANCH_IDX register to 1 to indicate that the embedded processor 414 will provide an index to the BRANCH_TABLE (as opposed to an offset value), and setting the EP OP COMPLETION.BRANCH_IDX register to the index associated with the next command stream to be processed; or (2) setting the EP_OP_COMPLETION.STATE register to 0x0 to indicate it has completed the processing to determine the next command stream, setting EP OP COMPLETION.USE_BRANCH_IDX register to 0 to indicate that the embedded processor 414 will provide the offset value (as opposed to an index), and setting the EP_CMD_BASE_OFFSET_LSB and EP_CMD_BASE_OFFSET_MSB registers to the MSB and LSBs of the offset respectively.

In some cases, the EP OP_COMPLETION, EP_CMD_BASE_OFFSET_LSB, and EP_CMD_BASE_OFFSET_MSB registers are connected to the command decoder via a single interface, which may be referred to as the ep_cmd_done interface. In such cases, the command decoder may be notified via this interface (the ep_cmd_done interface interface) of any changes to these registers. In some cases, a trigger signal may be sent to the command decoder on this interface when the EP_OP_COMPLETION register is written to/updated which causes the command decoder to act in accordance with these registers - e.g. determine the next command stream from the provided information and execute the next command stream. In such cases, if the embedded processor is providing an offset to the command decoder then the embedded processor may be configured to write to the offset registers (EP_CMD_BASE_OFFSET_LSB and EP CMD_BASE OFFSET_MSB) prior to writing or updating the EP_OP_COMPLETION register.

As described in Table 3, the embedded processor can update the address of the address of an Alt table using the EP_ALT_ADDR_UPDATE_LSB and EP_ALT_ADDR_UPDATE_MSB registers. The Alt table is a table that maps virtual addresses used by an NNA core to physical addresses in the external memory. The Alt table allows the same command stream to be used with different data. For example, if the command stream is to be used to run multiple (e.g. 16) different inputs with the same command stream, the embedded processor can adjust the Alt table for each input set of data to point to the appropriate input data. For example, the embedded processor can control a loop to execute the command stream with 16 different inputs by adding an offset to the Alt table after each iteration of the loop.

In some cases, the EP_ALT_ADDR_UPDATE_LSB, and EP ALT ADDR_UPDATE_MSB registers are connected to the command decoder via a single interface, which may be referred to as the ep_cmd_alt_address interface. In such cases, the command decoder may be notified via this interface (the ep_cmd_alt_address interface) of any changes to these registers. In some cases, a trigger signal may be sent to the command decoder on this interface when the EP ALT ADDR_UPDATE_MSB register is written to, or updated, which causes the command decoder to act in accordance with these registers - e.g. update the address of the Alt table. In such cases, if the embedded processor is to update/adjust both the MSBs and LSBs of the Alt table address, then the embedded processor may be configured to write or update the LSB register (the EP_ALT_ADDR_UPDATE_LSB register) prior to writing or updating the MSB register (the EP ALT ADDR_UPDATE_MSB register). In some cases, the command decoder may be configured to, regardless of when the command decoder receives updated Alt table information, only use the updated Alt table information for the next command stream. In other words, the command decoder may not switch between Alt tables within a command stream. This can prevent a race condition.

In some cases, the commands forming the command streams of a dynamic neural network are loaded into memory accessible to the command decoder 416. For example, as shown in FIG. 5, the commands forming the command streams of a dynamic neural network may be stored in external memory 426. In such cases, to process a particular command stream, the command decoder 416 may load the commands for that command stream from the external memory 426 into the command decoder 416. Accordingly, the command decoder 416 may comprise internal storage, such as, but not limited to, a buffer 508, which the command decoder 416 may use to temporarily store all or a portion of the commands of one or more command streams to mask the latency related to retrieving the commands from the external memory 426. In some cases, the buffer 508 may be a first-in-first-out (FIFO) buffer.

As described above, the command decoder 416 is configured to, when it processes a set of branch commands that indicate that the command decoder 416 is to branch to, or jump to, a next command stream and the next command stream is not known (e.g. it is a conditional branch), cause the embedded processor 414 to identify which command stream is to be processed next using desired criteria and/or conditions and notify the command decoder 416 of the identified command stream via a hardware feedback path. In these cases, the command decoder 416 may wait until the embedded processor 414 has identified the next command stream and notified the command decoder 416 of the identified command stream before the command decoder 416 retrieves the commands of that command stream from external memory 426. However, this can cause a delay in starting the processing of the next command stream. Accordingly, the command decoder 416 may be configured to mask this delay by proactively pre-fetching at least a portion of the commands for one or more likely next command streams from the memory (e.g. external memory 426).

Where the original command stream comprises commands defining a BRANCH_TABLE as described above, the command decoder 416 may be configured to pre-fetch at least a portion of the commands of the command streams associated with the first predetermined number, X, entries of the BRANCH_TABLE. In other words, the command decoder 416 may be configured to pre-fetch at least a portion at the command streams at the addresses in memory identified by the first X offsets in the BRANCH_TABLE. The BRANCH_TABLE may then be configured such that information for the most likely command streams to be processed is in the top X entries. In some cases, the amount of a command stream that is pre-fetched may be configurable and in some cases, the amount of a command stream that is pre-fetched may be configurable on a per command stream basis. For example, in addition to each entry of the BRANCH_TABLE comprising an index and an offset, each entry may also comprise information indicating a pre-fetch size (e.g. this may be defined in the command stream via the IDX<N>_PREFETCH_SIZE_MIN1 field of Table 2). The pre-fetch sizes may be selected based on the likelihood that the command stream is the command stream that will be processed next. For example, the pre-fetch sizes may be set such that the higher the likelihood that a command stream is the next command stream, the higher the pre-fetch size, and the lower the likelihood that a command stream is the next command stream, the lower the pre-fetch size.

In some cases, pre-fetching may be selectively disabled. In some cases, pre-fetching may be selectively disabled on a per command stream basis. For example, the command stream may specify (e.g. via the IDX<N>_DISABLE_BRANCH_PREFETCH field of Table 2) on a per BRANCH_TABLE entry basis whether pre-fetching of the associated command stream is enabled or disabled. Where only the top X entries are pre-fetched, whether the pre-fetching is explicitly disabled or enabled may only affect the top X entries. For example, if the command decoder 416 is configured to pre-fetch the command streams associated with the first two entries of the BRANCH_TABLE, even if pre-fetch is enabled for the third entry, the command stream associated with the third entry is not pre-fetched.

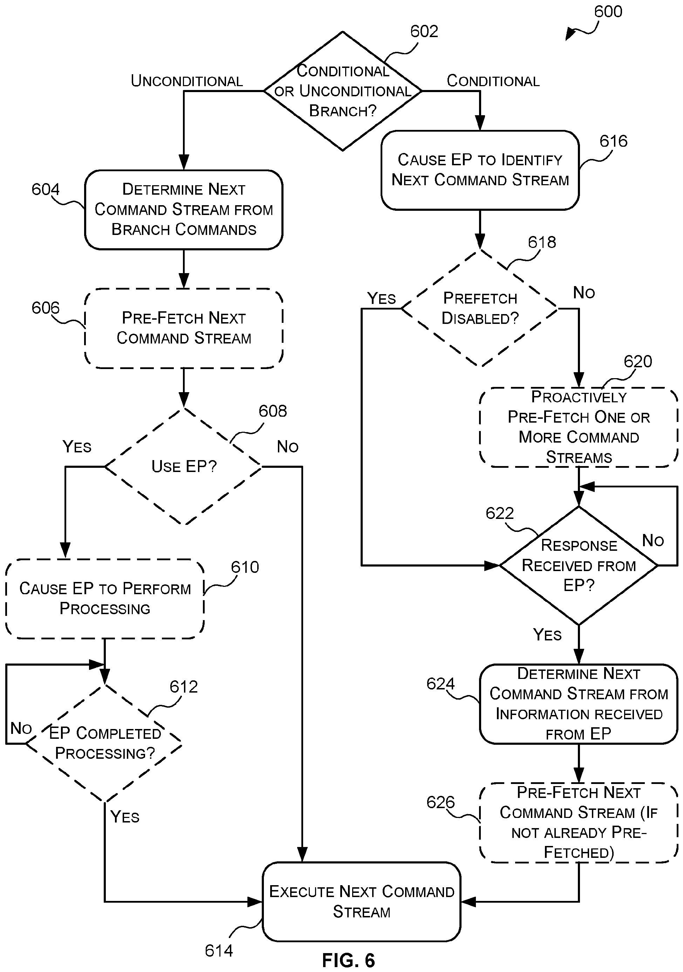

Reference is now made to FIG. 6 which illustrates an example method 600 that may be implemented by the command decoder 416 of FIG. 4 to process a set of branch commands (e.g. to process the commands of a branch hardware pass). The method 600 may be implemented after the command decoder 416 has determined, for example, that the hardware pass that it is processing is a branch hardware pass. There may be, for example, information in the commands of a branch hardware pass that identifies it as a branch hardware pass.

The method 600 begins at block 602 where the command decoder 416 determines whether the set of branch commands relates to an unconditional branch (i.e., the next command stream to execute is predetermined) or a conditional branch (i.e., the next command stream to execute is not predetermined and is based on one more criteria or conditions). In some cases, a set of branch commands may comprise a field, such as a BRANCH_STREAM field that indicates whether the set of branch commands relates to an unconditional or conditional branch. In such cases the command decoder 416 may be configured to analyse the BRANCH_STREAM field to determine whether the set of branch commands relates to an unconditional branch or a conditional branch. If it is determined that the set of branch commands relates to an unconditional branch then the method 600 proceeds to block 604. If, however, it is determined that the set of branch commands relates to a conditional branch then the method 600 proceeds to block 616.

At block 604, the command decoder 416 determines the next command stream to execute from the set of branch commands. In other words, for an unconditional branch information identifying the next command stream is embedded in the set of branch commands and the command decoder 416 analyses the set of branch commands to determine the next command stream to execute. In some cases, when a set of branch commands relates to an unconditional branch the set of branch commands may comprise information identifying a BRANCH_TABLE, as described above, and the first entry (e.g. the entry related to index 0) in the BRANCH_TABLE identifies the next command stream to execute. In such cases, the command decoder 416 may be configured to analyse the set of branch commands to identify the BRANCH_TABLE and determine that the next command stream to execute is the command stream identified (or pointed to) by the first entry. For example, where each entry in the BRANCH_TABLE includes the offset (with respect to the base address) of a command stream, the command decoder may determine that the address of the next command stream is the base address + the offset in the first entry of the BRANCH_TABLE. In other cases, the set of branch commands may include a special field, or the like, that explicitly identifies (e.g. via an offset) the next command stream to be executed.

In some cases, once the next command stream to be executed has been identified from the set of branch commands, the command decoder records information identifying the next command stream. For example, the command decoder may have a set of registers that are used to store the information about the command stream that is to be executed. In such cases, the command decoder may be configured to store information in the appropriate registers that identify the next command stream to be executed. For example, the command decoder may comprise a register that stores the offset of the next command stream to be executed and the command decoder may be configured to update this register with the offset of the next command stream to execute.

Once the next command stream to be executed has been identified from the set of branch commands (and optionally the command decoder has recorded information identifying the next command stream) the method 600 may proceed to block 606, 608 or 614. Specifically, if the command decoder supports pre-fetching (e.g. because the command streams are stored external to the command decoder) the method 600 may proceed to block 606; if the command decoder allows the embedded processor to be used to perform some processing before the next command stream is executed, the method 600 may proceed to block 608; and if the command decoder does not support either pre-fetching or allowing the embedded processor to perform some processing before the next command stream the method 600 may proceed directly to block 614.

At block 606, the command decoder may pre-fetch (or load) all or a portion of the next command stream determined in block 604 into internal storage (e.g. buffer 508) of the command decoder 416 from memory, or storage, external to the command decoder 416 (e.g. external memory 426). The amount of a command stream that is pre-fetched may be configurable and may be configurable on a per command stream basis. For example, as described above, each entry of a BRANCH_TABLE may comprise, in addition to an offset to a particular command stream, information identifying the amount of the command stream that is to be pre-fetched. Once the pre-fetching of the next command stream has been started, the method 600 may proceed to block 608 or block 614 depending on whether the command decoder allows the embedded processor to be used to perform some processing before the next command stream is executed.

At block 608, the command decoder determines from the set of branch commands whether the embedded processor (EP) is to perform some processing before the next command stream is executed. For example, the embedded processor may be used to: generate parameters etc. that are used in executing the next command stream; perform some tidying-up; notify another device in the system; and/or perform some post processing. However, it will be evident to a person of skill in the art that these are just examples of the processing that the embedded processor may be used to perform and that the embedded processor may be used to perform any suitable processing. In some cases, the set of branch commands may comprise a field, or the like, such as a KICK_EP OPERATION field, that indicates whether the embedded processor is to be used to perform some processing before the next command stream is executed. In such cases, the command decoder may be configured to analyse such a field of the set of branch commands to determine whether the embedded processor is to be used to perform some processing. If it is determined that the embedded processor is to be used to perform some processing before the next command stream is executed then the method 600 proceeds to block 610. If, however, it is determined that the embedded processor is not to be used to perform some processing then the method 600 proceeds to block 614.

At block 610, the command decoder causes the embedded processor to perform some processing. As described above, the command decoder may be configured to cause the embedded processor to perform some processing by notifying the embedded processor that it is to execute a predetermined program or function. Each program or function that the embedded processor can execute may be identified by an index, and the command decoder may identify the program or function that is to be executed via its index. The command decoder may also be able to provide one or more arguments or a pointer to arguments. In some cases, the command decoder may notify the embedded processor that it is to execute a predetermined program by writing to one or more EP control registers and raising and interrupt. For example, the command decoder may write the index of the program or function to execute and any arguments (or pointer to arguments) to that program or function to one or more EP control registers and raise an interrupt to notify the embedded processor that it should execute the program or function identified by those registers. Once the command decoder has caused the embedded processor to perform some processing the method 600 proceeds to block 612.

At block 612, the command decoder waits until the embedded processor has completed the requested processing. In some cases, the embedded processor may be configured to, once it has executed an identified program or function, notify the command decoder (e.g. by writing to one or more command decoder control registers). Once the command decoder has determined that the embedded processor has completed the processing, the method 600 proceeds to block 614.

At block 614, the command decoder starts executing or processing the next command stream. Executing or processing the next command stream comprises controlling the operation of the hardware accelerators and the embedded processor in accordance with the commands of the next command stream.

At block 616, which is implemented after it has been determined at block 602 that the set of branch commands relate to a conditional branch, the command decoder causes the embedded processor to identify the command stream that is to be processed or executed next using specific criteria and/or conditions. As described above, in some cases the command decoder may be configured to cause the embedded processor to identify which command stream is to be executed or processed next by causing the embedded processor to execute a predetermined program or function that causes the embedded processor to assess the specific criteria and/or conditions and provide the command decoder with information identifying the command stream to be executed next. The command decoder may be configured to cause the embedded processor to execute a specific program or function by notifying the embedded processor 414 that it is to execute a program or function and providing the embedded processor 414 with information that identifies the program or function. In some cases, the programs or functions that the embedded processor can execute are each identified by a unique index and the information provided to the embedded processor is the index of the program or function to be executed. The command decoder may also be able to provide the embedded processor with parameters or arguments which may be used in executing the identified program or function. In some cases, the operation of the embedded processor may be controlled by one more embedded processor control registers and the command decoder may be configured to cause the embedded processor to execute a program or function by writing information (e.g. index) identifying the program or function to be executed by the embedded processor to one or more EP control registers, optionally, writing any parameters or a pointer to parameters to one or more EP control registers, and issuing an interrupt to the embedded processor which causes the embedded processor to read the relevant EP control registers and execute the function or program identified thereby.

Once the command decoder has caused the embedded processor to identify the next control stream to execute, the method 600 proceeds either to block 618 or block 622. Specifically, where the command decoder supports proactively pre-fetching one or more command streams before the next command stream to be executed has been determined then the method may proceed to block 618. If, however, proactive pre-fetching is not supported then the method may proceed directly to block 622.

At block 618, the command decoder determines, from the set of branch commands, if proactive pre-fetching of command streams, before the next command stream to be executed has been identified by the embedded processor, has been disabled. As described above, in some cases the command decoder may be configured to, when it is processing a conditional branch, proactively pre-fetch a predetermined number, X, of likely command streams to mask the delay in fetching the next command stream after the embedded processor has identified the next command stream. As described above, and in more detail below with respect to block 620, in some cases a set of branch commands may identify a BRANCH_TABLE that comprises one or more entries wherein each entry identifies, or points to, a command stream, and the command decoder is configured to pre-fetch the command streams identified in the first X entries in the BRANCH_TABLE. However, in some cases, the proactive pre-fetching may be selectively disabled. For example, where the branch commands define a BRANCH_TABLE, each entry in the BRANCH_TABLE may indicate whether the corresponding command stream is to be proactively pre-fetched. In such cases, the command decoder may be configured to determine that proactive pre-fetching has been disabled if the BRANCH_TABLE indicates that pre-fetching has been disabled for each of the first X entries of the BRANCH_TABLE.

If it has been determined that proactive pre-fetching of command streams, before the next command stream has been identified by the embedded processor, has been disabled the method 600 proceeds directly to block 622. If, however, it has been determined that pre-fetching of command streams, before the next command stream has been identified by the embedded processor, has not been disabled then the method 600 proceeds to block 620.

At block 620, all or a portion of one or more command streams are pre-fetched (or loaded) into local storage (e.g. buffer 508) of the command decoder from memory, or storage, external to the command decoder (e.g. external memory 426). As described above, in some cases, a set of branch commands may define a BRANCH_TABLE that comprises one or more entries wherein each entry identifies a command stream, and the command decoder is configured to pre-fetch each command stream identified in the first X entries in the BRANCH_TABLE for which pre-fetching has not been disabled. Pre-fetching a command stream may comprise identifying the address in memory of the command stream and reading all or a portion of the command stream from memory and storing the read portion of the command stream in local storage (e.g. buffer). Where each BRANCH_TABLE entry comprises an offset from a base address from which the corresponding command stream is stored in memory, the command decoder may be configured to determine the address of a command stream associated with a BRANCH_TABLE entry to be the base address + the offset stored in that entry.

The amount or portion of a command stream that is pre-fetched may be configurable and may be configurable on a per command stream basis. For example, as described above, each entry of a BRANCH_TABLE may comprise, in addition to information identifying a command stream (e.g. offset), information identifying the amount or portion of the command stream that is to be pre-fetched. In such cases, the command decoder may determine the amount or portion of a command stream to be pre-fetched from the BRANCH_TABLE.

Once all or a portion of one or more command streams have been pre-fetched, the method 600 proceeds to block 622.

At block 622, the command decoder waits until it receives information from the embedded processor indicating which command stream is to be executed or processed next. Once the command decoder has received information from the embedded processor indicating which command stream is to be executed or processed next, the method 600 proceeds to block 624.

At block 624, the command decoder determines from the information received from the embedded processor which command stream is to be executed next. As described above, in some cases the embedded processor may be configured to identify the command stream to be executed or processed next by providing one of: (i) an index into a BRANCH_TABLE defined in the set of branch commands; or (ii) an offset from which the address in memory of the command stream can be determined.

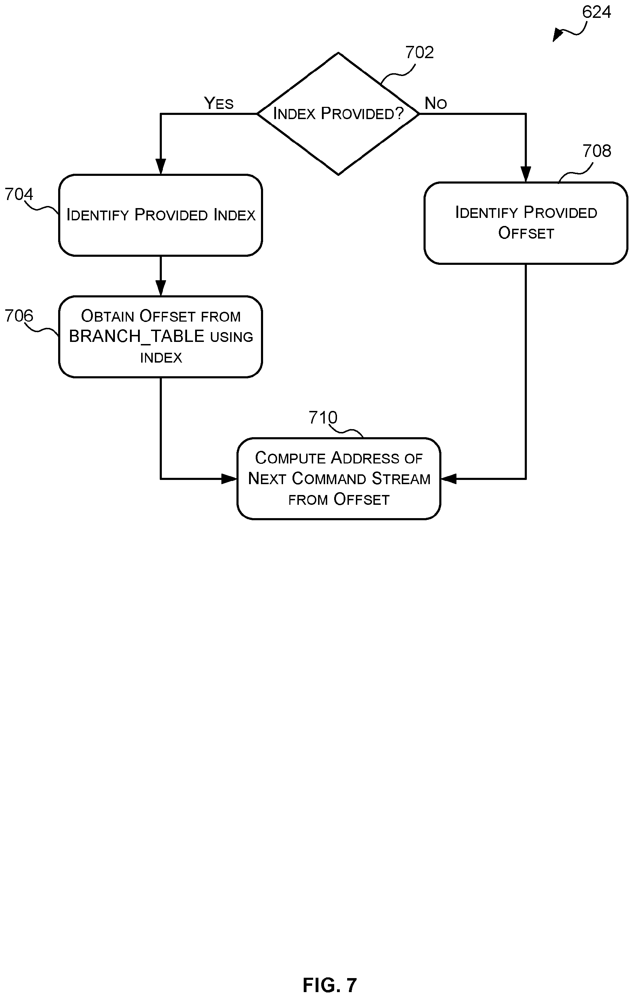

Reference is now made to FIG. 7 which illustrate an example method of implementing block 624 of the method 600 of FIG. 6 when the embedded processor may identify the command stream to be executed or processed next via (i) an offset from which the address in memory of the command stream can be determined or (ii) an index into a BRANCH_TABLE defined in the set of branch commands. The method begins at block 702 where the command decoder determines whether the embedded processor has provided an index. In some cases, the embedded processor may use a specific field and/or register to indicate that the embedded processor has provided an index. For example, as described above with respect to Table 3, the embedded processor may set the EP OP COMPLETION.USE_BRANCH_IDX field/register to "1" if an index is provided. In such cases, the command decoder may determine from that field or register whether the embedded processor has provided an index. If it has been determined that the embedded processor has provided an index then the method proceeds to block 704. If, however, it has been determined that the embedded processor has not provided an index, then the embedded processor has provided an offset and the method proceeds to block 708.

At block 704, the command decoder identifies the index provided by the embedded processor. In some cases, the embedded processor may use a specific field and/or register to provide the index of the next command stream to be executed. For example, as described above with respect to Table 3, the embedded processor may store the index of the BRANCH_TABLE entry that is associated with the next command stream to be executed in the EP OP COMPLETION.BRANCH_IDX field or register. In such cases, the command decoder may read this field or register to identify the index provided by the embedded processor. Once the index provided by the embedded processor has been identified the method proceeds to block 706.

At block 706, the command decoder obtains the offset for the next command stream to be executed or processed next from the BRANCH_TABLE using the index identified in block 704. For example, if the provided index is 3 then the command decoder may read the entry of the BRANCH_TABLE corresponding to index 3 and extract the offset from the read entry. The method then proceeds to block 710.

At block 708, which is implemented if an index has not been provided by the embedded processor meaning that an offset has been explicitly provided, the command decoder identifies the offset provided by the embedded processor. In some cases, the embedded processor may use a specific field and/or register to provide the offset for the next command stream to be executed. For example, as described above with respect to Table 3, the embedded processor may store the offset for the next command stream to be executed in a combination of the EP CMD_BASE OFFSET_MSB and EP CMD_BASE_OFFSET_LSB fields/registers. In such cases, the command decoder may read these fields or registers to identify the relevant offset. Once the relevant offset has been identified the method proceeds to block 710.

A block 710, the command decoder computes the address of the next command stream from the offset obtained or identified in block 706 or block 708. In some cases, the command decoder may compute the address of the next command stream to be the sum of the offset and the base address (e.g. NN_BASE_CMD_BASE_ADDRESS). Once the command decoder computes the address of the next command stream the method may end.

Returning to FIG. 6, once the command decoder has determined the next command stream to be executed or processed from the information provided by the embedded processor, the method 600 may proceed to block 626 or block 614.

At block 626, if the identified command stream has not already been pre-fetched (e.g. in block 620) then all or a portion of the identified command stream is pre-fetched or loaded into internal or local storage (e.g. buffer 508) of the command decoder from memory external to the command decoder (e.g. external memory 426). Once all or a portion of the identified command stream has been loaded into internal or local storage of the command decoder, the method proceeds to block 614 where the command decoder starts executing the next command stream.

### Multi-Core

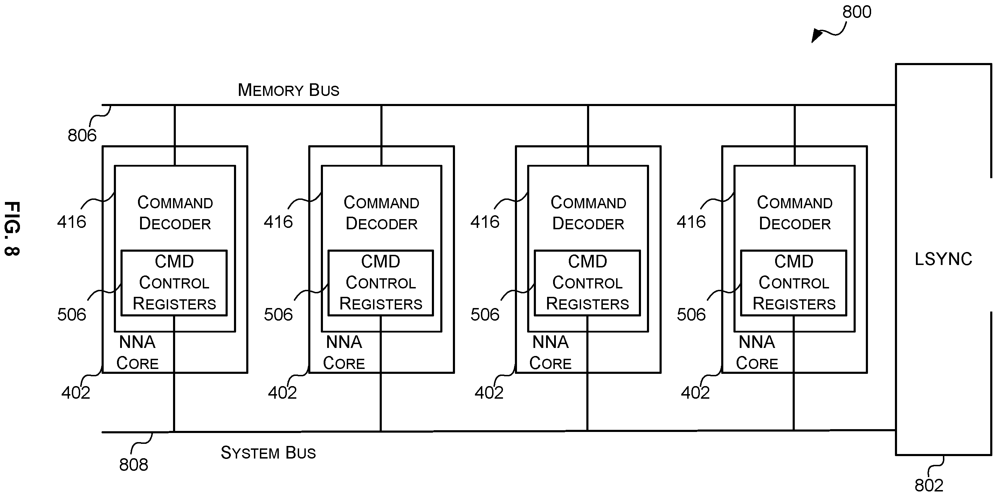

Although the NNA in FIG. 5 comprise a single NNA core 402, in other examples an NNA may comprise multiple NNA cores 402 which may work in conjunction with each other to execute a neural network. Reference is now made to FIG. 8 which illustrates an example NNA 800 with multiple NNA cores 402. In the example of FIG. 8 there are four NNA cores 402, but it will be evident to a person of skill in the art that this is an example only and there may be two NNA cores, or more than two NNA cores. In this example each NNA core 402 corresponds to an NNA core 402 described with respect to FIG. 4, but in other examples one or more of the NNA cores 402 may be different. At a minimum each NNA core 402 comprises a command decoder or controller, an embedded processor and a hardware feedback path between the embedded processor and the command decoder.

Where an NNA, such as the NNA 800 of FIG. 8, comprises multiple NNA cores 402 and a conditional branch arises in a command stream then either (i) each NNA core 402 (and specifically the embedded processor 414 thereof) may determine (using the same criteria and/or conditions) which command stream is to be executed next; (ii) only one NNA core 402 (and specifically, the embedded processor 414 thereof), which may be referred to as the master or primary NNA core 402, may determine which command stream is to be executed next and that NNA core 402 may notify the other NNA cores 402, which may be referred to as the slave or secondary NNA cores 402, of the next command stream; or (iii) the NNA cores 402 (and specifically the embedded processors 414 thereof) may work together to determine which command stream is to be executed next, but there is master or primary NNA core 402 that makes the final decision and notifies the other NNA cores 402 (i.e. the slave or secondary NNA cores 402). In some cases, scenario (iii) may be implemented by having the embedded processors perform the processing which is used to determine what is the next command stream to be executed in EP hardware passes that precede the branch pass and only have the embedded processor of the master NNA core make the decision in the branch pass and thus scenario (iii) may be understood as a variant of scenario (ii).

In scenario (i), the command decoder of each NNA core 402 may be configured to, when, it reaches a set of branch commands that relate to a conditional branch, operate as described above. For example, each NNA core 402 may be configured to implement blocks 616 to 626 and 614 of the method 600 of FIG. 6. In these cases the NNA cores 402 may be referred to as independent cores. Where the cores are operating as independent cores there may be one or more synchronisation points at which the cores ensure that they are at the same point in the dynamic neural network. For example, before a branch hardware pass, all cores may have to meet a set of pre-conditions to ensure that all of the cores are ready to execute the branch condition; and/or after execution of a first hardware pass of a new command stream the cores may synchronise again using a hardware pass synchronisation to ensure that they move on to the next hardware pass of that command stream at the same time.

In scenario (ii) or (iii), the primary or master NNA core may operate differently from a secondary or slave NNA core when it reaches a set of branch commands that relate to a conditional branch. Specifically, the primary or master NNA core may be configured to, when it reaches a set of branch commands that relate to a conditional branch, cause its embedded processor to determine the next command stream to be executed, and once the command decoder has received information from the embedded processor identifying the next command stream the command decoder may be configured to notify all the NNA core(s) (including itself) of the next command stream. In contrast, a secondary or slave NNA core may be configured to, when it reaches a set of branch commands that relate to a conditional branch, instead of causing its embedded processor to determine the next command stream to be executed or processed, the NNA core simply waits until it receives information from the master NNA core.

The primary or master NNA core 402 may be configured to notify the NNA core(s) 402 of the next command stream to be executed in any suitable manner. In some cases the primary or master NNA core may be configured to notify the NNA cores of the next command stream to be executed by broadcasting information identifying the next command stream to be executed to the NNA cores. For safety and security reasons the NNA cores may not be able to directly communicate with each other. Accordingly, in one example, which is shown in FIG. 8, the NNA 800 may comprise a core synchronisation module 802 (which is referred to in FIG. 8 as an LSYNC module) which is a hardware module that acts as an intermediary between the NNA cores. Specifically, if an NNA core wants to communicate with another NNA core it may do so via the LSYNC module 802. For example, to notify the NNA cores of the next command stream to execute, the primary or master NNA core may notify the LSYNC module 802 of the next command stream to execute and the LSYNC module 802 may notify the NNA cores of the next command stream to execute.

FIG. 8 shows one example of how the NNA cores and LSYNC module 802 may communicate. It will be evident to a person of skill in the art that this is just an example and that the NNA cores and the LSYNC module 802 may communicate in another manner. In the example shown in FIG. 8 the NNA cores 402 and the LSYNC module 802 are connected via a first bus 806, which may be referred to as the memory bus, which allows the NNA cores 402 to write data to memory addresses; and a second bus 808, which may be referred to as the system bus. In this example, a primary or master NNA core 402 may notify the LSYNC module 802 of the next command stream to execute by writing, via the memory bus 806, information identifying the next command stream to be executed or processed to memory addresses in a predetermined range (referred to as the LSYNC data memory addresses) accessible, and monitored, by the LSYNC module 802. The LSYNC module 802 may then be configured to, when it detects a write (on the memory bus 806) to an LSYNC memory address identifying the next command stream to execute or process, notify the NNA cores of the next command stream to execute or processed via the system bus 808. In some cases, the LSYNC module 802 may be configured to notify all NNA cores of the next command stream to execute or process.

In some cases, as shown in FIG. 8, the LSYNC module 802 may be configured to notify an NNA core of the next command stream to execute or process by writing information identifying the next command stream to be executed, via, the system bus 808, to one or more command decoder control registers. In such cases, in addition to writing information to an LSYNC memory address identifying the next command stream to be executed, the primary NNA core may also be configured to write information to an LSYNC memory address identifying the command decoder control register(s) that this information is to be written to, and the LSYNC module 802 may be configured to write the information identifying the next command stream to the identified command decoder control register(s). In some cases, the LSYNC module 802 may be able to write to the identified command decoder control registers of all the NNA cores by issuing a single write instruction on the system bus that will be picked up by each of the cores.

The information identifying the next command stream that is provided to the LSYNC module 802 (e.g. by writing that information to an LSYNC memory address) by the command decoder 416 of the master or primary NNA core 402 may be any information that identifies the next command stream. In some cases, the primary or master NNA core 402 may be configured to provide the LSYNC module with the same information that the NNA core 402 received from its embedded processor identifying the next command stream to the LSYNC module 802. For example, if, as described above, the embedded processor 414 provides the command decoder 416 with an index into the BRANCH_TABLE the command decoder 416 may be configured to provide the index to the LSYNC module 802 (e.g. by writing the index to an LSYNC memory address); and if the embedded processor 414 provides the command decoder with an offset (with respect to a base address) the command decoder may be configured to provide the offset to the LSYNC module 802 (e.g. by writing the received offset to an LSYNC memory address). As described above, where the embedded processor 414 provides an offset, the embedded processor may also provide a pre-fetch amount or size. In such cases, the command decoder 416 of the primary or master NNA core may also be configured to provide the received pre-fetch amount or size to the LSYNC module 802 (e.g. by writing the received pre-fetch amount or size to an LSYNC memory address).

Similarly, the LSYNC module 802 may be configured to provide (e.g. by writing to one or more command decoder control registers) the same information identifying the next command stream to be executed or processed that the LSYNC module 802 receives from the primary or master NNA core to the NNA core(s). For example, if the LSYNC module 802 receives an index from the primary or master NNA core, then the LSYNC module 802 may provide the received index to the NNA core(s) (e.g. by writing the index to one or more command decoder control registers of the NNA core(s)); and if the LSYNC module 802 receives an offset (and optionally a pre-fetch amount or size) then the LSYNC module 802 may be configured to provide the received offset (and pre-fetch amount or size) to the NNA core(s) (e.g. by writing the offset and/or the pre-fetch amount or size to one or more command decoder control registers of the NNA core(s)).

Once the command decoder of an NNA core 402 has received information identifying the next command stream to be executed or processed via the LSYNC module 802, the command decoder starts executing or processing the identified command stream as described above, which may comprise, first pre-fetching a predetermined amount of the identified command stream.

Although FIGS. 5 and 8 show that both the embedded processor and the LSYNC module write to the same set of command decoder (CMD) control registers 506, in some cases the command decoder (CMD) control registers 506 may be subdivided into one or more groups of registers and each group of registers can only be written to by one device. For example, the command decoder (CMD) control registers 506 may comprises a group of registers which only the embedded processor can write to, and another group of registers which only the LSYNC module 802 can write to.

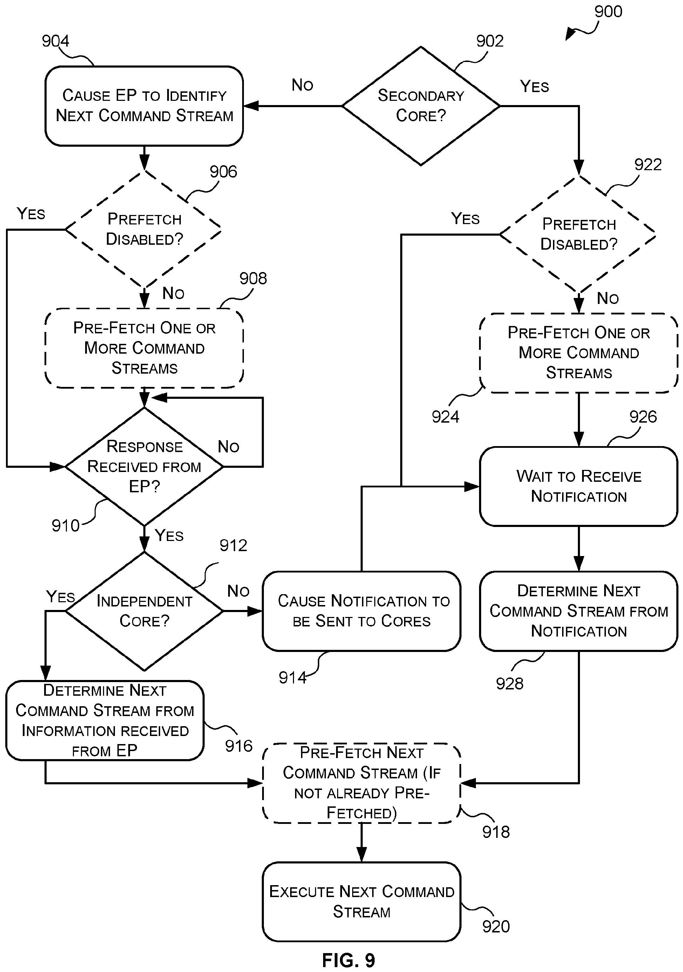

Reference is now made to FIG. 9 which illustrates an example method 900 that may be implemented by an NNA core in an NNA wherein a NNA core may be configured as any of an independent NNA core, a primary NNA core or a secondary NNA core. The method 900 may be implemented by any and/or each of the NNA cores 402 of FIG. 8. The method 900 may be implemented after the command decoder 416 of the NNA core 402 has determined that it is processing a set of branch commands and the set of branch commands relate to a conditional branch.

The method begins at block 902 where the command decoder 416 determines whether the NNA core to which it belongs is a secondary NNA core. If the NNA core is not a secondary core then the NNA core is either an independent core or a primary NNA core. The command decoder 416 may determine that it belongs to, or forms part of, a secondary NNA core if the branch commands do not indicate that the embedded processor (EP) is to be used to determine the next command stream. For example, in some cases, the set of branch commands may comprise a field, such as, but not limited to a KICK_EP OPERATION field, which indicates whether the embedded processor is to be used to determine the next command stream. In these cases, the command decoder may determine, from this field, whether the NNA core to which it belongs is a secondary NNA core. If it is determined that the NNA core to which the command decoder belongs, or forms part of, is not a secondary NNA core then the method proceeds to block 904. If, however, it is determined that the NNA core to which the command decoder belongs, or forms part of, is a secondary NNA core then the method proceeds to block 922.

At block 904, which is implemented if the NNA core to which the command decoder belongs is not a secondary NNA core (i.e., the NNA core to which the command decoder belongs is a primary NNA core or an independent NNA core), the command decoder causes the corresponding embedded processor to determine the command stream to be executed or processed using specific criteria and/or conditions. Block 904 corresponds to block 616 of the method 600 of FIG. 6 thus all of the comments above with respect to block 616 equally apply to block 904. Specifically, in some cases, the command decoder may be configured to cause the embedded processor to identify which command stream is to be executed or processed next by causing the embedded processor to execute a predetermined program or function that causes the embedded processor to assess the specific criteria and/or conditions and provide the command decoder with information identifying the command stream to be executed next. The command decoder may be configured to cause the embedded processor to execute a specific program or function by notifying the embedded processor 414 that it is to execute a program or function, and providing the embedded processor 414 with information that identifies the program or function. In some cases, the programs or functions that the embedded processor can execute are each identified by a unique index and the information that identifies a program or function is the index of the program or function. The command decoder may also be able to provide the embedded processor with parameters or arguments which may be used in executing the identified program or function. In some cases, the operation of the embedded processor may be controlled by one more embedded processor control registers and the command decoder may be configured to cause the embedded processor to execute a program or function by writing information (e.g. an index) identifying the program or function to be executed by the embedded processor and any parameters or a pointer to parameters to one or more embedded processor control registers and notifying the embedded processor (e.g. via an interrupt) that it is to execute a new program or function identified in the embedded processor control registers.

Once the NNA core has caused its embedded processor to identify the next command stream to be executed or processed, the method 900 proceeds to block 906 or block 910. Specifically, where the NNA core supports proactively pre-fetching all or a portion of one or more command streams before the next command stream to be executed has been identified, the method 900 proceeds to block 906. If, however, the NNA core does not support proactive pre-fetching then the method 900 may proceed directly to block 910.

At blocks 906 and 908, which correspond to blocks 618 and 620 of the method 600 of FIG. 6, the command decoder (of the independent or primary NNA core) proactively pre-fetches all or a portion of one or more command streams (e.g. the first X command streams identified in the BRANCH_TABLE), if pre-fetching is enabled. Accordingly any comments made above with respect to blocks 618 and 620 of the method 600 of FIG. 6 equally apply to blocks 906 and 908 respectively. The method 900 then proceeds to block 910.

At block 910, the command decoder waits for information from its embedded processor identifying which command stream is to be executed or processed next (which may be referred to as a response). Once the command decoder has received information from the embedded processor identifying the next command stream be executed, the method 900 proceeds to block 912.

At block 912, the command decoder determines if the NNA core to which it belongs, or forms part of, is a primary NNA core or an independent NNA core. A primary NNA core is one which uses its embedded processor to determine which command stream to execute next and notifies a set of NNA cores of the determination. In contrast, an independent NNA core is one which uses its embedded processor to determine which command stream to execute next but does not notify any other NNA cores of the determination. In some cases, the embedded processor may be configured to, in addition to providing the command decoder with information identifying the next command stream, provide information to the command decoder indicating whether it is to notify other NNA cores of the next command stream (which also indicates whether the NNA core is a primary NNA core or an independent core). For example, in some cases, the embedded processor may be configured to write information to a specific field or register indicating whether or not the NNA core is a primary NNA core. For example, as shown in Table 3, the embedded processor may be configured to use the register/field EP_OP COMPLETION. BROADCAST field or register to indicate whether the NNA core is to notify other NNA cores of the next command stream (which indicates whether the NNA core is a primary NNA core or an independent NNA core). Specifically, in one example, the embedded processor may be configured to set the EP OP_COMPLETION. BROADCAST field to "1" when the command decoder is to broadcast the information identifying the next command stream (e.g. index or offset) to other NNA cores and set the EP_OP_COMPLETION. BROADCAST field to "0" when the command decoder is not to broadcast the information identifying the next command stream (e.g. index or offset). In such cases, the command decoder may be configured to determine that the NNA core to which it belongs is a primary NNA core if the EP_OP_COMPLETION. BROADCAST field is set to "1" and is an independent NNA core if this field is set to "0". If it is determined that the NNA core is a primary NNA core then the method proceeds to block 914. If, however, it is determined that the NNA core is not a primary NNA core, then the NNA core is an independent NNA core, and the method 900 proceeds to block 916.

At block 914, the command decoder (of the primary NNA core) notifies the NNA cores (e.g. the secondary NNA cores and the primary NNA core) of the next command stream to execute or process based on the information received from the embedded processor. The command decoder may notify the NNA cores of the next command stream to execute or process in any suitable manner. For example, as described above, the NNA may comprise an LSYNC module which acts as an intermediately between the NNA cores. In such cases, the command decoder (of the primary NNA core) may notify the LSYNC module of the next command stream to execute or process and the LSYNC module may notify the NNA cores of the next command stream to execute. As described above, in some cases, the command decoder may notify the LSYNC module of the next command stream to execute by writing information identifying the next command stream to an LSYNC memory address and the LSYNC module may be configured to, in response to receiving such information, write or store the information in one or more command decoder control registers of each of the NNA cores. Once the command decoder (of the primary NNA core) has caused all the NNA cores to be notified of the next command stream, the method 900 proceeds to block 926.

At block 916, the command decoder (of the independent NNA core) determines from the information received from the embedded processor (EP) the command stream to be executed next. Block 916 corresponds to block 624 of the method 600 of FIG. 6. Accordingly, any comments made above with respect to block 624 equally apply to block 916. Specifically, in some cases the embedded processor may be configured to identify the command stream to be executed or processed next by providing one of: (i) an index into a BRANCH_TABLE defined in the set of branch commands; or (ii) an offset from which the address in memory of the command stream can be determined. In such cases, block 916 may be implemented via the method described above with respect to FIG. 7. Specifically, the command decoder (of the independent core) may first determine whether the embedded processor has provided an index. If it has been determined that the embedded processor has provided an index then the provided index is identified. In some cases, the embedded processor may be configured to write an index to a specific field or register. In such cases, the command decoder may read this field or register to identify the relevant index. Once the index has been identified, the command decoder obtains the offset for the next command stream to be executed or processed from the BRANCH_TABLE using the identified index. If however, it has been determined that the embedded processor has not provided an index (e.g. the embedded processor has provided an offset), the command decoder identifies the offset provided. In some cases, the embedded processor may be configured to write an offset to a specific field or register (or set of fields or set of registers). In such cases, the command decoder may read this field or register (or set of fields or set of registers) to identify the relevant offset. The command decoder may then compute the address of the next command stream from the offset explicitly provided or the offset obtained from the BRANCH_TABLE. Once the next command stream has been identified the method may proceed to block 918 or block 920.

At block 918, if the identified command stream has not already been pre-fetched (e.g. in block 908) then all or a portion of the identified command stream is pre-fetched or loaded into internal or local storage (e.g. buffer 508) of the command decoder from memory external to the command decoder (e.g. external memory 426). Block 918 generally corresponds to block 626 of the method 600 of FIG. 6, thus any comments made above with respect to block 626 equally apply to block 918. Once all or a portion of the identified command stream has been loaded into internal or local storage of the command decoder, the method 900 proceeds to block 920.

At block 920, the next command stream is executed. Executing or processing the next command stream comprises controlling the operation of the hardware accelerators and the embedded processor in accordance with the commands of the next command stream.

At blocks 922 and 924, which correspond to blocks 618 and 620 of the method 600 of FIG. 6, the command decoder (of a secondary NNA core) proactively pre-fetches all or a portion of one or more command streams (e.g. the first X command streams identified in the BRANCH_TABLE), if pre-fetching is enabled. Accordingly any comments made above with respect to blocks 618 and 620 of the method 600 of FIG. 6 equally apply to blocks 922 and 924 respectively. The method 900 then proceeds to block 926.

At block 926, which is implemented if the NNA core to which the command decoder belongs is a primary NNA core or a secondary NNA core, the command decoder waits to receive a notification comprising information identifying the next command stream. As described above, in some cases, the primary NNA core may be configured to notify the NNA cores of the next command stream by providing information identifying the next command stream to the LSYNC module (e.g. by writing the information (e.g. an index or an offset) to an LSYNC memory address) which causes the LSYNC module to provide that information to all the NNA cores (e.g. by writing the information (e.g. an index or an offset) to one or more registers of each NNA core). However, it will be evident to a person of skill in the art that this is an example only and that the primary or master NNA core may cause the NNA cores to be notified of the next command stream in any suitable manner. Once the command decoder of a primary or secondary NNA core has received a notification of the next command stream to be executed, the method 900 proceeds to block 928.

At block 928, the command decoder (of a primary or secondary NNA core) determines from the notification which command stream is to be executed next. As described above, in some cases a primary NNA core may be configured to cause the NNA cores to be notified of the next command stream by causing one of: (i) an index into a BRANCH_TABLE defined in the branch commands; or (ii) an offset from which the address in memory of the command stream can be determined, to be provided to the NNA cores.

Where the notification can comprise an index or an offset then block 928 may be implemented by a method similar to the method described above with respect to FIG. 7 to implement block 624. Specifically, the command decoder may first determine whether the notification includes an index. If it has been determined that notification includes an index then the index is identified. As described above, in some cases, the LSYNC module may be configured to write an index to a specific field or register. In such cases, the command decoder may read this field or register to identify the relevant index. Once the index has been identified the command decoder may obtain the offset for the next command stream to be executed or processed from the BRANCH_TABLE using the identified index. If, however, it has been determined that the notification does not include an index (e.g. the notification includes an offset), the command decoder identifies the offset provided. As described above, in some cases, the LSYNC module may be configured to write an offset to a specific field or register. In such cases, the command decoder may read this field or register to identify the relevant offset. The command decoder may then compute the address of the next command stream from the offset explicitly provided or the offset obtained from the BRANCH_TABLE. Once the command decoder has determined the next command stream to be executed or processed from the notification, the method 900 proceeds to block 918 or block 920 where the next command stream is pre-fetched and then executed.

### Branch Commands

In some cases, a set of branch commands in a command stream may be independent or stand-alone. Specifically, in some cases a set of branch commands in a command stream may not have any interaction with, or be related to, branch commands in another command stream. In particular, in some cases, a set of branch commands may simply (i) cause the command decoder to jump to a predetermined (if an unconditional branch) command stream; or (ii) cause the command decoder to cause the embedded processor to start and complete a function or program to determine the next command stream to be executed or processed, and branch or jump to the next command stream.

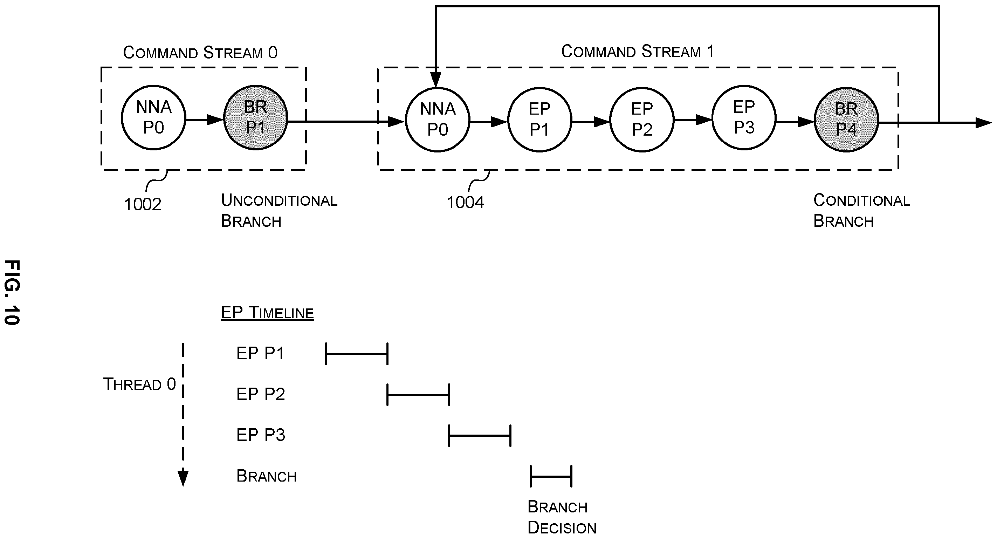

For example, as shown in FIG. 10, there may be a first command stream 1002, which may be referred to as command stream 0, and a second command stream 1004, which may be referred to as command stream 1. The first command stream 1002 comprises a set of branch commands (in the form of a branch pass (BR P1)) and the second command stream 1004 comprises a second set of branch commands (in the form of a branch pass (BR P4)). The set of branch commands in each of the command streams 1002 and 1004 are independent. Specifically, the branch commands (BR P1) in the first command stream 1002 cause the command decoder to jump or branch to the second command stream 1004 using information embedded in the branch commands (e.g. the BRANCH_TABLE embedded therein); and the branch commands (BR P4) in the second command stream 1004 cause the command decoder to (i) cause the embedded processor to execute a function or program to determine the next commands stream to execute (which may be command stream 1 again or another command stream), and to (ii) jump or branch to the next command stream. Accordingly, there is no interaction between the branch commands of the two command streams.

In other cases, a set of branch commands in one command stream may interact or may be related to a set of branch commands in another command stream. For example, a set of branch commands in one command stream may be configured to cause the embedded processor to start a function or process that can be updated via branch commands in another command stream. This may be a more efficient way of implementing a long loop (i.e., a loop in which a specific command stream is executed multiple times before a branch or jump is made to a different command stream).

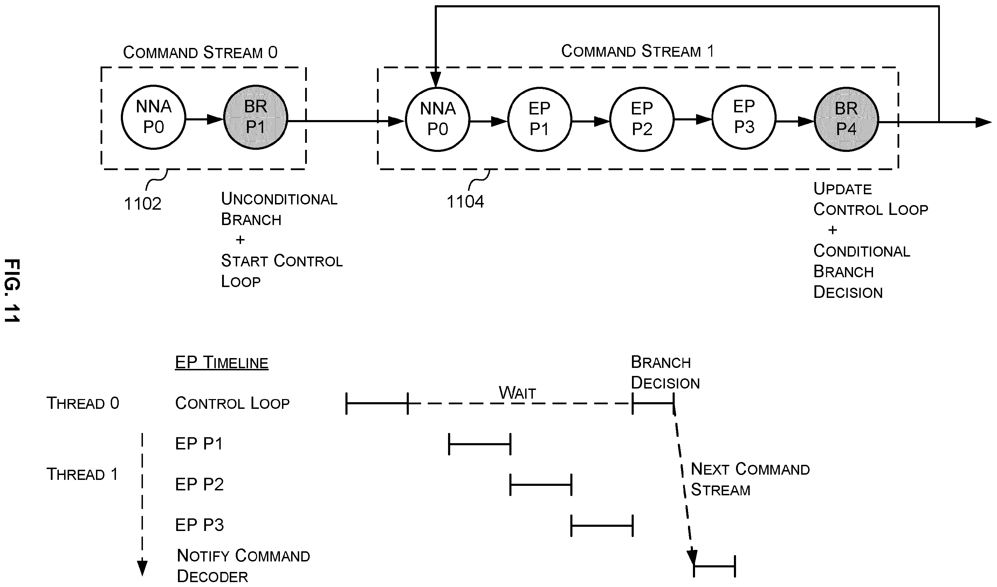

For example, as shown in FIG. 11, there may be a first command stream 1102, which may be referred to as command stream 0, and a second command stream 1104, which may be referred to as command stream 1. After the first command stream 1102 is executed or processed, the second command stream 1104 is executed or processed a plurality of times before another command stream is executed. In this example, the first command stream 1102 comprises a set of branch commands (in the form of a branch pass BR P1) that (i) cause the command decoder to unconditionally branch to command stream 1; and (ii) cause the embedded processor to start a control loop process or function that remains active until it is determined that the loop is done. The second command stream 1104 comprises a set of branch commands (in the form of a branch pass BR P4) that causes an update to the control loop process which causes the control loop to determine whether it should continue repeating the current command stream or exit the loop and execute another command stream.

For example, if the control loop process is counting the number of iterations of command stream 1 then the set of branch commands in the second command stream 1104 may cause the control loop process to increment the number of iterations, the control loop process may then compare the number of iterations to a threshold number of iterations to determine whether the command decoder should execute the second command stream 1104 again or another command stream. It will be evident to a person of skill in the art that using the number of iterations to determine whether to continue looping or to exit the loop is an example only and that any suitable condition(s) and/or criteria may be used to control the loop. For example, depending on the application, the control loop may use, for example, an environment matrix or the water level to determine whether to continue looping or exit the loop.

In this example the main control loop remains open or running until the last iteration of the second command stream 1104 has been completed. It can be seen in FIG. 11 that after the control loop is initially started or initiated by the branch commands in the first command stream 1102 the control loop may remain dormant or inactive until it is re-activated by the branch commands in the second command stream 1104. However, the control loop is not closed or completed until the last iteration of command stream 1 has been completed. Since the main control loop remains open or running through all iterations or loops of the second command stream 1104, information or data (which may be used to make a branch decision) may be kept between iterations without having to write out that data from the NNA core.

The ability of the command decoder to jump or branch between command streams may also allow the NNA to implement macro functions. A macro function is defined herein as a command stream that can be called from any part of a neural network and is inserted in a neural network between two other command streams. Accordingly, like any other command stream, a macro function can comprise commands for one or more hardware passes which may include one or more operations hardware passes such as, but not limited to, NNA hardware passes and EP hardware passes, and a branch hardware pass. A macro function is different from a standard, or regular, command stream in that the next command stream to be executed after the macro function is not based on the commands in the macro function, but is based on where in the sequence of commands streams the neural network is when the macro function is called. Accordingly, it cannot be determined from the commands forming a macro function which command stream is to be executed after the macro function. Therefore, when a set of branch commands causes a branch to a macro function, the set of branch commands may also comprise information indicaing which command stream is to be executed after the macro function. This causes the command decoder to provide this information to the embedded processor. The embedded processor then stores this information in memory accessible to the embedded processor (e.g. in an allocated memory location of the internal memory 430). Then, when the embedded processor executes the branch commands in the macro function the embedded processor uses the information received from the command decoder to determine which command stream to execute next.

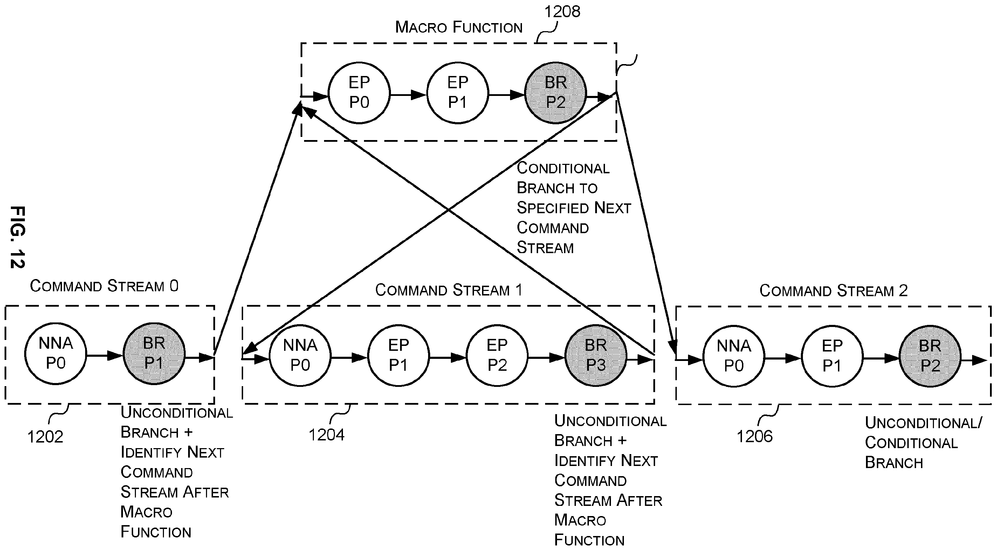

For example, as shown in FIG. 12, there may be a first command stream 1202, which may be referred to as command stream 0; a second command stream 1204, which may be referred to as command stream 1; a third command stream 1206, which may be referred to as command stream 2; and a macro function 1208. In this example, the macro function 1208 is to be executed or called between the first and second command streams 1202 and 1204 and between the second and third command streams 1204 and 1206. Accordingly, after the macro function 1208 has been executed a first time (in this example) the second command stream 1204 is to be executed, and after the macro function 1208 has been executed a second time (in this example), the third command stream 1206 is to be executed. This is accomplished by adding to the branch commands (in the form of a branch pass BR P1) of the first command stream 1202, not only commands that cause the command decoder to jump or branch to the macro function 1208, but also commands that cause the command decoder to notify the embedded processor that after the macro function has been executed that the second command stream 1204 is to be executed; adding to the branch commands (in the form of a branch pass BR P3) of the second command stream 1204, not only commands that cause the command decoder to jump or branch to the macro function 1208, but also commands that cause the command decoder to notify the embedded processor that after the macro function 1208 has been executed that the third command stream 1206 is to be executed; and configuring the branch commands (in the form of a branch pass BR P2) in the macro function 1208 to cause the command decoder to cause the embedded processor to select the next command stream to be executed to be the command stream identified by the calling command stream. The commands that cause the command decoder to notify the embedded process of the command stream that is to be executed after a macro function may comprise information identifying the index and/or offset of a return command stream.

In some cases, macro function calls may be nested. For example, a command stream may call a first macro function which calls a second macro function which calls a third macro function. In such cases, each set of branch commands that call a macro function may include commands which cause the command decoder to notify the embedded processor of the next command stream to execute after the macro function is complete (which may be referred to as the return command stream), and thus the embedded processor may keep a stack of return command streams similar to a software function call stack and pop the command stream information off the stack one at a time. For example, in the example above, after the third macro function is executed it may pop the information off the stack indicating that the it should return to the second macro function; after the second macro function is executed it may pop the information off the stack indicating that it should return to the first macro function; and after the first macro function is executed it may pop the information off the stack indicating that it should now execute the return command stream provided by the initial calling command stream.

### Method

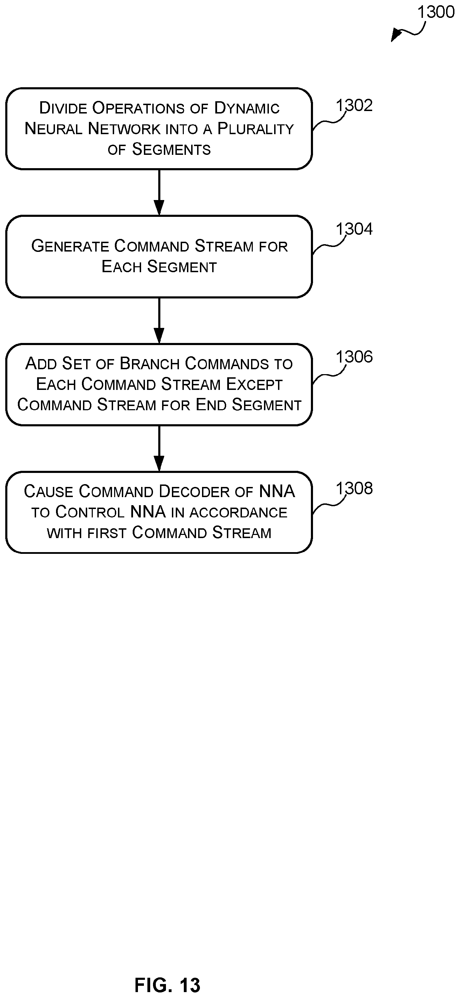

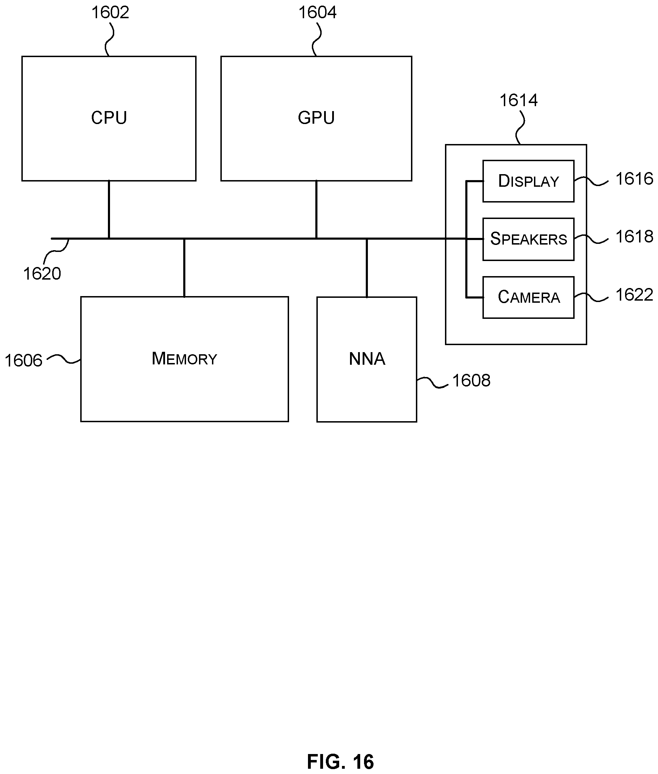

Reference is now made to FIG. 13 which illustrates an example method 1300 of executing a dynamic neural network on a neural network accelerator comprising a neural network accelerator core that comprises one or more hardware accelerators, each hardware accelerator configured to accelerate one or more neural network operations, an embedded processor and a command decoder configured to control the operation of the one or more hardware accelerators and the embedded processor. The method may be implemented by a processor, such as, but not limited to, the CPU 1602 of FIG. 16.

The method 1300 begins at block 1302 where the operations of the dynamic neural network are divided into a plurality of segments wherein the operations in each segment are performed as a block.

As described above, some NNAs are configured to perform a pass (e.g. forward pass/inference or backward pass) of a neural network (including a dynamic neural network) over one or more hardware passes of the NNA. A hardware pass of an NNA is defined as performing some processing using one or more components (e.g. one or more accelerators and/or the embedded processor) of the NNA. Some NNAs have hardware constraints (e.g., the size of buffers, number of convolution engines, number of pooling engines) that limit the processing that can be performed in a hardware pass, or the order in which, or number of times that, a hardware pass can use components (e.g. hardware accelerators, embedded processor) of the NNA. Where all of the processing to implement a neural network cannot be completed in a single hardware pass of the NNA, the processing may have to be split into multiple hardware passes of the NNA.

To execute a neural network on such an NNA the hardware passes to perform a pass (e.g. forward pass/inference or backward pass) of a dynamic neural network may be identified by first mapping each layer of the dynamic neural network to a sequence of one or more low level layers, wherein a low level layer is a set of one or more neural network operations that can be performed by a single component of the NNA (e.g. by single hardware accelerator or by the embedded processor). Once the layers of the dynamic neural network have been mapped to low level layers, the low level layers may be divided into one or more layer groups, wherein each layer group comprises a sequence of one or more low level layers that can be implemented on the NNA. The sequences of lower level layers that can be implemented by the NNA depend on the components (e.g. hardware accelerators, embedded processor etc.) of the NNA and how they can be connected to process data.

Once the low level layers have been split into one or more layer groups, it is determined, for each layer group, whether that layer group can be implemented in a single hardware pass of the NNA. Specifically, depending on the NNA hardware constraints, it may not be possible to perform all of the processing associated with a layer group in the same hardware pass of the NNA. For example, the input tensor to the first layer of the layer group may be too large to be processed in a single hardware pass of the NNA. Accordingly, if it is determined that a layer group cannot be implemented in a single hardware pass of the NNA that layer group is divided into a plurality of hardware passes. An example method for identifying hardware passes to implement a pass of a neural network is described in the Applicant's UK patent application no. 2209584.8. Since the hardware passes of the NNA identified at this stage are used to implement operations they are referred to herein as operations hardware passes.

In such cases, dividing the operations of the dynamic neural network into a plurality of segments may comprise dividing the hardware passes into a plurality of segments, wherein each segment comprises a set of hardware passes that are executed as a block.

Once the operations of the dynamic neural network have been divided into a plurality of segments the method 1300 proceeds to block 1304.

At block 1304, an initial command stream is generated for each segment which, when executed by the command decoder, causes the neural network accelerator core to perform the operations in that segment. Where each segment comprises one or more operations hardware passes the control stream for a segment comprises a command stream for each operations hardware pass in the segment. The command stream for an operations hardware pass may comprise a set of commands that cause the neural network accelerator to perform the operations in the operations hardware pass. As described above, the set of commands for an operations hardware pass may specify the components (e.g. hardware accelerators and/or embedded processor) that are active (i.e. used) in the hardware pass, how the active components are to be configured, the format of one or more data sets used in the hardware pass etc. Once a command stream for each segment has been generated, the method proceeds to block 1306.

At block 1306, a set of one or more branch commands is added to the initial command stream of each segment, except an end segment of the plurality of segments, to generate a final command stream for that segment. The set of one or more branch commands cause the neural network accelerator to perform an unconditional or conditional branch to a next command stream. A set of one or more branch commands that cause the neural network accelerator to perform a conditional branch cause the command decoder to cause the embedded processor to determine the next command stream and provide information to the command decoder identifying the next command stream. The set of one or more branch commands added to the initial command streams effectively link the plurality of segments in a dynamic manner.

Each set of one or more branch commands may comprise (i) information identifying whether the branch is a conditional branch or an unconditional branch, (ii) if a conditional branch, information identifying the program or function that the embedded processor is to execute to identify the next command stream, and (iii) if an unconditional branch, information identifying the next command stream. For example, each set of branch commands may comprise a field, such as a BRANCH_STREAM field that indicates whether the set of branch commands relates to an unconditional or conditional branch. The BRANCH_STREAM field may, for example, be set to NONE, UNCONDITIONAL or CONDITIONAL.

In some cases, one or more sets of branch commands may comprise information defining a BRANCH_TABLE as described above. For example, the one or more sets of branch commands may comprise information identifying one or more entries of a BRANCH_TABLE where each entry is identified by a unique index and comprises an offset (e.g. from a base address) to a command stream. Each entry may further comprise information identifying a pre-fetch size or amount and/or information indicating whether pre-fetch is disabled for that entry. In some cases, the set of one or more branch commands may comprise all or some of the fields shown in Table 2 that define a BRANCH_TABLE. Where a set of branch commands relates to an unconditional branch and the set of branch comprises information defining a branch table then the information identifying the next command stream may be the offset in a particular entry (e.g. the first entry) of the BRANCH_TABLE.

Where the segments of block 1302 comprise one or more operations hardware passes, the set of one or more branch commands may be in the form of a set of commands to implement a branch hardware pass.

Once the branch commands have been added to the initial command streams of the relevant segments to generate the final command streams, the method 1300 proceeds to block 1308.

At block 1308, the command decoder is caused to control the operation of the one or more hardware accelerators and the command decoder in accordance with a command stream for a first segment of the plurality of segments. This will cause the command decoder to jump to the appropriate next segment based on the status and circumstances. The method 1300 may then end.

### Convolution Accelerator

Reference is now made to FIG. 14 which illustrates an example implementation of the convolution accelerator 406 of FIG. 4. In this example, the convolution accelerator 406 comprises a plurality of convolution engines 1402.

Each convolution engine 1402 comprises hardware logic configured to receive a set of weights {k₁, k₂ ..., k₈} that represent all or a portion of a filter, and a set of input data values {x₁, x₂, ... , x₈} that represent all or a portion of a window of the input data, and perform a multiply-accumulate calculation on the received weights and input data values. In some examples, as shown in FIG. 15, each convolution engine 1402 may comprise a plurality of multipliers 1502, each of which is configured to multiply a weight (kᵢ) and a corresponding input data value (xᵢ) to produce a multiplication output value. The multipliers 1502 are followed by a plurality of adders 1504. The adders may form an adder tree to calculate the sum of the multiplication outputs. In the example of FIG. 15 the convolution engine 1402 comprises eight multipliers 1502, but in other examples there may be more or fewer multipliers. For example, in some cases there may be 128 multipliers. Generally, if there are Z multipliers, the adder tree comprises Z-1 adders. The example convolution accelerator 406 of FIG. 14 comprises four convolution engines 1402, however, it will be evident to a person of skill in the art that this is an example only and there may be only one convolution engine, there may be two convolution engines, or there may be more than two convolution engines.

Since it may take more than one hardware pass of the convolution engines 1402 to generate a complete filter result (e.g. because a convolution engine may only receive and process a portion of the weights of a filter and/or a portion of the input data values of a window in a cycle), the convolution accelerator 406 may also comprise a plurality of accumulators 1404. A pass of the convolution engines comprises receiving a set of weights and a set of input data values and performing a multiply-accumulate operation thereon. Each accumulator 1404 receives the output of one convolution engine 1402 and adds the output to previous convolution engine outputs that relate to the same filter. Since a convolution engine 1402 may not generate or produce outputs that relate to the same filter in consecutive cycles the partial results of one or more filters may be stored in an accumulation buffer 1406 and then the appropriate partial results may be provided to the accumulators 1404 each cycle by the accumulation buffer 1406.

In some cases, the convolution accelerator 406 may comprise or have access to an input buffer 1408 for storing the elements of the input tensor and a coefficient buffer 1410 for storing the weights of the convolution. In some cases the input buffer 1408 may be implemented as a plurality of banks of memory. In these cases, there may be a multiplexor (not shown) for each convolution engine 1402 that is coupled to each bank of the input buffer 1408 to allow the data stored in any of the banks to be selectively directed to any of the convolution engines 1402.

### Computer system

FIG. 16 shows a computer system in which the neural network systems described herein may be implemented. The computer system comprises a CPU 1602, a GPU 1604, a memory 1606, a neural network accelerator (NNA) 1608, which may be implemented as any of the NNAs described herein (e.g. the NNA 400 of FIG. 4 or the NNA 800 of FIG. 8) and other devices 1614, such as a display 1616, speakers 1618 and a camera 1622. In other examples, one or more of the depicted components may be omitted from the system. In other examples, the NNA may be a GPU with one or more hardware accelerators for accelerating one or more neural network operations. The components of the computer system can communicate with each other via a communications bus 1620.

The neural network accelerators, neural network accelerator cores, convolution accelerators and convolution engines of FIGS. 4, 5, 8, 14 and 15 are shown as comprising a number of functional blocks. This is schematic only and is not intended to define a strict division between different logic elements of such entities. Each functional block may be provided in any suitable manner. It is to be understood that intermediate values described herein as being formed by an accelerator, core or engine need not be physically generated by the accelerator, core or engine at any point and may merely represent logical values which conveniently describe the processing performed by the accelerator, core or engine between its input and output.

The neural network accelerators described herein may be embodied in hardware on an integrated circuit. The neural network accelerators described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a neural network accelerator configured to perform any of the methods described herein, or to manufacture a neural network accelerator comprising any apparatus described herein. An integrated circuit definition dataset may be, for example, an integrated circuit description.

Therefore, there may be provided a method of manufacturing, at an integrated circuit manufacturing system, a neural network accelerator as described herein. Furthermore, there may be provided an integrated circuit definition dataset that, when processed in an integrated circuit manufacturing system, causes the method of manufacturing a neural network accelerator to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

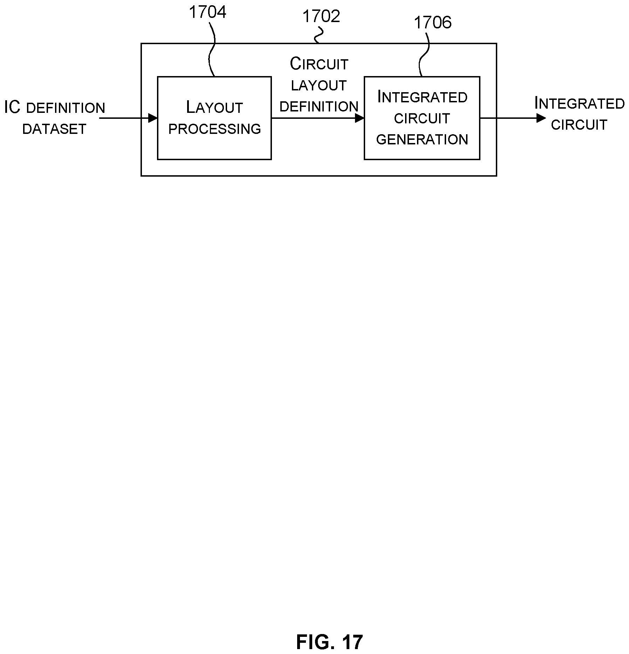

An example of processing an integrated circuit definition dataset at an integrated circuit manufacturing system so as to configure the system to manufacture a neural network accelerator will now be described with respect to FIG. 17.

FIG. 17 shows an example of an integrated circuit (IC) manufacturing system 1702 which is configured to manufacture a neural network accelerator as described in any of the examples herein. In particular, the IC manufacturing system 1702 comprises a layout processing system 1704 and an integrated circuit generation system 1706. The IC manufacturing system 1702 is configured to receive an IC definition dataset (e.g. defining a neural network accelerator as described in any of the examples herein), process the IC definition dataset, and generate an IC according to the IC definition dataset (e.g. which embodies a neural network accelerator as described in any of the examples herein). The processing of the IC definition dataset configures the IC manufacturing system 1702 to manufacture an integrated circuit embodying a neural network accelerator as described in any of the examples herein.

The layout processing system 1704 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1704 has determined the circuit layout it may output a circuit layout definition to the IC generation system 1706. A circuit layout definition may be, for example, a circuit layout description.

The IC generation system 1706 generates an IC according to the circuit layout definition, as is known in the art. For example, the IC generation system 1706 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1706 may be in the form of computer-readable code which the IC generation system 1706 can use to form a suitable mask for use in generating an IC.

The different processes performed by the IC manufacturing system 1702 may be implemented all in one location, e.g. by one party. Alternatively, the IC manufacturing system 1702 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a neural network accelerator without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 17 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 17, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

Further examples are now provided by way of a first set of clauses:
Clause 1. A method 1300 of executing a dynamic neural network comprising a plurality of operations on a neural network accelerator comprising a neural network accelerator core, the neural network accelerator core comprising one or more hardware accelerators to accelerate one or more neural network operations, an embedded processor and a command decoder configured to control the operation of the one or more hardware accelerators and the embedded processor, the method comprising: dividing 1302 the plurality of operations of the dynamic neural network into a plurality of segments; generating 1304 an initial command stream for each segment that, when executed by the command decoder, causes the neural network accelerator core to perform the operations in that segment; adding 1306 a set of one or more branch commands to the command stream of each segment, except an end segment of the plurality of segments, to generate a final command stream for that segment, each set of one or more branch commands, when executed by the command decoder, cause the neural network accelerator core to perform an unconditional or conditional branch to a next command stream, wherein causing the neural network accelerator core to perform an unconditional branch to a next command stream comprises causing the embedded processor to determine the next command stream and provide information to the command decoder identifying the next command stream; and causing 1308 the command decoder to control the operation of the one or more hardware accelerators and the embedded processor in accordance with the final command stream for a first segment of the plurality of segments.
Clause 2. The method 1300 of clause 1, wherein each set of one or more branch commands comprises information indicating whether the neural network accelerator core is to perform an unconditional branch or a conditional branch.
Cause 3. The method 1300 of clause 2, wherein, when a set of one or more branch commands comprises information indicating that the neural network accelerator core is to perform an unconditional branch, that set of one or more branch commands also comprises information identifying the next command stream.
Clause 4. The method 1300 of clause 3, wherein that set of one or more branch commands comprises information defining a branch table that comprises one or more entries, each entry comprises information identifying a final command stream or an initial command stream for an end segment; and wherein the information identifying the next command stream comprises the information in a particular entry of the branch table that identifies a final command stream or an initial command stream associated with an end segment.
Clause 5. The method 1300 of clause 4, wherein the particular entry of the branch table is a first entry of the branch table.
Clause 6. The method 1300 of any of clauses 2 to 5, wherein causing the embedded processor to determine the next command stream and provide information to the command decoder identifying the next command stream comprises causing the embedded processor to execute one of a plurality of functions; and, when a set of one or more branch commands comprises information indicating that the neural network accelerator core is to perform a conditional branch, that set of one or more branch commands also comprises information identifying a function of the plurality of functions that the embedded processor is to execute.
Clause 7. The method 1300 of clause 6, wherein each of the plurality of functions is associated with a unique index and the information identifying a function of the plurality of functions is an index associated with a particular function of the plurality of functions.
Cause 8. The method 1300 of any of clauses 2 to 7, wherein: the set of branch commands for at least one of the segments comprises information indicating that the neural network accelerator is to perform an unconditional branch; the set of branch commands for the at least one of the segments also comprises information defining a branch table comprising one or more entries, each entry comprises information identifying a final command stream or an initial command stream for an end segment; and causing the embedded processor to determine the next command stream comprises causing the embedded processor to identify one entry of the branch table.
Clause 9. The method 1300 of clause 8, wherein each entry is associated with a unique index and the information provided to the command decoder identifying the next command stream is the index associated with an entry of the branch table.
Clause 10. The method 1300 of any of clauses 1 to 9, wherein dividing the plurality operations of the dynamic neural network into a plurality of segments comprises (i) dividing the plurality of operations of the dynamic neural network into a plurality of operations hardware passes of the neural network accelerator and (ii) dividing the operations hardware passes of the neural network accelerator into a plurality of segments.
Clause 11. The method 1300 of clause 10, wherein dividing the operations of the dynamic neural network into a plurality of operations hardware passes comprises: (i) mapping each layer of the dynamic neural network to a sequence of one or more low level layers, wherein a low level layer is a set of one or more neural network operations that can be performed by a single hardware accelerator or by the embedded processor, (ii) dividing the low level layers into layer groups, wherein each layer group comprises a sequence of one or more low level layers that can be implemented on the neural network accelerator, and (iii) for any layer group that cannot be implemented in a single hardware pass, sub-dividing the layer group into a plurality of hardware passes based on one or more hardware constraints of the neural network accelerator.
Clause 12. The method 1300 of clause 10 or clause 11, wherein the initial command stream for a segment comprises a command stream for each hardware pass of that segment, and the command stream for each hardware pass comprises information identifying which of the one or more hardware accelerators and the embedded processor are active in the hardware pass.
Clause 13. The method 1300 of any of clauses 10 to 12, wherein the plurality of operations hardware passes comprises a least one neural network hardware pass in which at least one of the hardware accelerators is active in the hardware pass and at least one embedded processor hardware pass in which the embedded processor is active in the hardware pass.
Clause 14. The method 1300 of any of clauses 10 to 13, wherein adding a set of one or more branch commands to an initial command stream to generate a final command stream comprises adding a set of commands to the initial command stream to implement a branch hardware pass.
Clause 15. The method 1300 of any of clauses 2 to 14, wherein the neural network accelerator comprises at least one additional neural network accelerator core, and when a set of one or more branch commands comprises information indicating that the neural network accelerator is to perform an unconditional branch, that set of one or more branch commands also comprises information indicating whether the neural network accelerator core is to provide the information received from the embedded processor to the at least one additional neural network accelerator core.
Clause 16. The method 1300 of any of clauses 1 to 15, wherein the sets of one or more branch commands added to the initial command streams for the segments cause the final command streams to be dynamically linked based on one or more criteria.
Clause 17. Computer readable code configured to cause the method of any of clauses 1 to 16 to be performed when the code is run.
Clause 18. A computer readable storage medium having encoded thereon the computer readable code of clause 17.

Further examples are now provided by way of a second set of clauses:
1. A neural network accelerator (400, 800) comprising one or more neural network accelerator cores (402), each neural network accelerator core (402) comprising:
   one or more hardware accelerators (406, 408, 410, 412), each hardware accelerator (406, 408, 410, 412) configured to accelerate one or more neural network operations;
   an embedded processor (414);
   a command decoder (416); and
   a hardware feedback path between the embedded processor (414) and the command decoder (416);
   wherein the command decoder (416) of at least one neural network accelerator core (402) of the one or more neural network accelerator cores (402) is configured to control the one or more hardware accelerators (406, 408, 410, 412) and the embedded processor (414) of that core in accordance with commands of a command stream, and when the command stream comprises a set of one or more branch commands that indicate a conditional branch is to be performed, cause the embedded processor (414) to determine a next command stream, and in response to receiving information from the embedded processor (414) identifying the next command stream via the hardware feedback path, control the one or more hardware accelerators (406, 408, 410, 412) and the embedded processor (414) in accordance with commands of the next command stream.
2. The neural network accelerator (400, 800) of clause 1, wherein the command decoder (416) is configured to cause the embedded processor (414) to determine the next command stream by causing the embedded processor (414) to execute a function of a plurality of functions.
3. The neural network accelerator (400, 800) of clause 2, wherein the command decoder (416) is configured to cause the embedded processor (414) to execute the function of the plurality of functions by providing information to the embedded processor (414) that identifies the function.
4. The neural network accelerator (400, 800) of clause 3, wherein the information that identifies the function of the plurality of functions comprises an index associated with the function.
5. The neural network accelerator (400, 800) of any preceding clause, further comprising a plurality of embedded processor control registers (502) that control the operation of the embedded processor (414), and wherein the command decoder (416) is configured to cause the embedded processor (414) to determine the next command stream by writing data to one or more of the plurality of embedded processor control registers (502).
6. The neural network accelerator (400, 800) of any preceding clause, wherein the information identifying the next command stream comprises information identifying an address in memory of the next command stream.
7. The neural network accelerator (400, 800) of clause 6, wherein the information identifying the address in memory of the next command stream comprises information identifying an offset relative to a base address.
8. The neural network accelerator (400, 800) of claclause im 7, wherein the set of one or more branch commands define a branch table that comprises one or more entries, each entry of the branch table is associated with a unique index and comprises an offset relative to the base address, and the information identifying the offset relative to the base address comprises an index associated with an entry of the branch table.
9. The neural network accelerator (400, 800) of clause 8, wherein the command decoder (416) is configured to, when the information identifying the offset relative to the base address comprises an index of the branch table, obtain the offset in the entry of the branch table associated with the index, and determine the address in memory of the next command stream from the obtained offset and the base address.
10. The neural network accelerator (400, 800) of clause 7, wherein the information identifying the offset relative to the base address comprises a value of the offset.
11. The neural network accelerator (400, 800) of clause 10, wherein the command decoder (416) is configured to, when the information identifying the offset relative to the base address comprises the value of the offset, determine the address in memory of the next command stream from the value of the offset and the base address.
12. The neural network accelerator (400, 800) of any preceding clause, further comprising a plurality of command decoder control registers (506) that control the operation of the command decoder (416), wherein the embedded processor (414) is configured to provide the command decoder (416) with the information identifying the next command stream by writing the information to one or more of the plurality of command decoder control registers (506).
13. The neural network accelerator (400, 800) of any preceding clause, wherein:
   an address in memory of a command stream is determined from a base address and an offset;
   the set of one or more branch commands identify a branch table that comprises one or more entries, each entry of the branch table being associated with a unique index and comprising an offset; and
   the command decoder (416) is further configured to, in response to determining that the command stream comprises a set of one or more branch commands that indicate a conditional branch is to be performed, proactively pre-fetch all or a portion of one or more command streams from memory using one or more offsets in the branch table.
14. The neural network accelerator (400, 800) of clause 13, wherein the one or more offsets comprise the offsets in a first X entries of the branch table, wherein X is an integer greater than or equal to two.
15. The neural network accelerator (400, 800) of clause 13 or clause 14, wherein the set of one or more branch commands identifies a pre-fetch amount for each of the one or more command streams and the command decoder (416) is configured to proactively prefetch the identified pre-fetch amount of each of the one or more command streams.
16. The neural network accelerator (400, 800) of any of clauses 13 to 15, wherein the set of one or more branch commands indicate whether proactive pre-fetching is enabled, and the command decoder (416) is configured to only proactively pre-fetch all or a portion of the one or more command streams when the set of one or more branch commands indicates that proactive pre-fetching is enabled.
17. The neural network accelerator (400, 800) of any preceding clause, wherein the command decoder (416) is configured to, when the command stream comprises a set of one or more branch commands that indicate an unconditional branch to a predetermined command stream identified in the set of one or more branch commands is to be performed, control the hardware accelerators and the embedded processor in accordance with commands of the predetermined command stream.
18. The neural network accelerator (800) of any preceding clause, wherein:
   the neural network accelerator (800) comprises a plurality of neural network accelerator cores (402) that comprise a primary neural network accelerator core and one or more secondary neural network accelerator cores;
   the at least one neural network accelerator core comprises the primary neural network accelerator core, and the at least one neural network accelerator core is further configured to notify the one or more secondary neural network accelerator cores of the next command stream; and
   the command decoder (416) of each of the one or more secondary neural network accelerator cores is configured to control the one or more hardware accelerators (406, 408, 410, 412) and the embedded processor (414) of that core in accordance with the commands of the command stream, and when the command stream comprises a set of one or more branch commands that indicate a conditional branch is to be performed, wait for the notification from the primary neural network accelerator core of the next command stream, and then control the hardware accelerators and the embedded processor of that core in accordance with commands of the next command stream.
19. The neural network accelerator (800) of any of clauses 1 to 17, wherein the neural network accelerator (800) comprises a plurality of neural network accelerator cores (402) and the at least one neural network accelerator core comprises each of the plurality of neural network accelerator cores.
20. The neural network accelerator (400, 800) of any preceding clause, wherein when the next command stream implements a macro function (1208), the set of one or more branch commands comprises information identifying a return command stream, and the commands of the next command stream cause the command decoder (416) to branch to the return command stream at an end of the macro function.
21. The neural network accelerator (400, 800) of any preceding clause, wherein causing the embedded processor (414) to identify a next command stream comprises causing the embedded processor (414) to update a function running on the embedded processor (414) that was initiated by a previous command stream
22. The neural network accelerator (400, 800) of any preceding clause, wherein the command stream and the next command stream form part of a dynamic neural network.
23. The neural network accelerator (400, 800) of any preceding clause, wherein the embedded processor (414) is a micro-controller.
24. A method (600) of processing a dynamic neural network at a neural network accelerator comprising one or more hardware accelerators, an embedded processor, and a command decoder, the method comprising, at the command decoder:
   controlling the one or more hardware accelerators and the embedded processor in accordance with commands of a command stream;
   in response to determining that the command stream comprises a set of one or more branch commands that indicate that a conditional branch is to be performed (602), cause the embedded processor to determine a next command stream (616); and
   in response to receiving information from the embedded processor identifying the next command stream, controlling the one or more hardware accelerators and the embedded processor in accordance with commands of the next command stream (624, 614).
25. A neural network accelerator (400, 800) comprising one or more hardware accelerators, an embedded processor and a command decoder, wherein the neural network accelerator is configured to perform the method of clause24.
26. The neural network accelerator (400, 800) of any of clauses 1 to 23 and 25, wherein the neural network accelerator (400, 800) is embodied in hardware on an integrated circuit.
27. A method of manufacturing, using an integrated circuit manufacturing system, the neural network accelerator (400, 800) of any of clauses 1 to 23 and 25 to 26.
28. An integrated circuit definition dataset that, when processed in an integrated circuit manufacturing system, configures the integrated circuit manufacturing system to manufacture the neural network accelerator (400, 800) of any of clauses 1 to 23 and 25 to 26.

## Claims

1. A neural network accelerator (400, 800) comprising one or more neural network accelerator cores (402), each neural network accelerator core (402) comprising:
one or more hardware accelerators (406, 408, 410, 412), each hardware accelerator (406, 408, 410, 412) configured to accelerate one or more neural network operations;
an embedded processor (414);
a command decoder (416) configured to process commands from a command stream; and
a hardware feedback path between the embedded processor (414) and the command decoder (416), wherein the hardware feedback path is configured to enable the embedded processor (414) to notify the command decoder (416) of which command stream the command decoder 416 is to process next;
wherein the command decoder (416) of at least a first neural network accelerator core (402) of the one or more neural network accelerator cores (402) is configured to:
i) control the one or more hardware accelerators (406, 408, 410, 412) and the embedded processor (414) of that core in accordance with commands of a command stream;
ii) in response to processing a command stream comprising a set of one or more branch commands that indicate a conditional branch is to be performed, cause the embedded processor (414) to determine a next command stream, and
iii) in response to receiving information, via the hardware feedback path, from the embedded processor (414) identifying the next command stream, control the one or more hardware accelerators (406, 408, 410, 412) and the embedded processor (414) in dependence on the commands of the next command stream.

2. The neural network accelerator (400, 800) of claim 1, wherein the command decoder (416) is configured to cause the embedded processor (414) to determine the next command stream by causing the embedded processor (414) to execute a function of a plurality of functions.

3. The neural network accelerator (400, 800) of claim 2, wherein the command decoder (416) is configured to cause the embedded processor (414) to execute the function of the plurality of functions by providing information to the embedded processor (414) that identifies the function, wherein the information that identifies the function of the plurality of functions comprises an index associated with the function.

4. The neural network accelerator (400, 800) of any preceding claim, further comprising a plurality of embedded processor control registers (502) that control the operation of the embedded processor (414), and wherein the command decoder (416) is configured to cause the embedded processor (414) to determine the next command stream by writing data to one or more of the plurality of embedded processor control registers (502).

5. The neural network accelerator (400, 800) of any preceding claim, wherein the information identifying the next command stream comprises information identifying an address in memory of the next command stream.

6. The neural network accelerator (400, 800) of claim 5, wherein the information identifying the address in memory of the next command stream comprises information identifying an offset relative to a base address, wherein the set of one or more branch commands define a branch table that comprises one or more entries, each entry of the branch table is associated with a unique index and comprises an offset relative to the base address, and the information identifying the offset relative to the base address comprises an index associated with an entry of the branch table.

7. The neural network accelerator (400, 800) of claim 6, wherein the command decoder (416) is configured to, when the information identifying the offset relative to the base address comprises an index of the branch table, obtain the offset in the entry of the branch table associated with the index, and determine the address in memory of the next command stream from the obtained offset and the base address.

8. The neural network accelerator (400, 800) of claim 6, wherein the information identifying the offset relative to the base address comprises a value of the offset, and wherein the command decoder (416) is configured to, when the information identifying the offset relative to the base address comprises the value of the offset, determine the address in memory of the next command stream from the value of the offset and the base address.

9. The neural network accelerator (400, 800) of any preceding claim, further comprising a plurality of command decoder control registers (506) that control the operation of the command decoder (416), wherein the embedded processor (414) is configured to provide the command decoder (416) with the information identifying the next command stream by writing the information to one or more of the plurality of command decoder control registers (506).

10. The neural network accelerator (400, 800) of any preceding claim, wherein:
an address in memory of a command stream is determined from a base address and an offset;
the set of one or more branch commands identify a branch table that comprises one or more entries, each entry of the branch table being associated with a unique index and comprising an offset; and
the command decoder (416) is further configured to, in response to determining that the command stream comprises a set of one or more branch commands that indicate a conditional branch is to be performed, proactively pre-fetch all or a portion of one or more command streams from memory using one or more offsets in the branch table,
wherein the one or more offsets comprise the offsets in a first X entries of the branch table, wherein X is an integer greater than or equal to two.

11. The neural network accelerator (400, 800) of claim 10, wherein the set of one or more branch commands identifies a pre-fetch amount for each of the one or more command streams and the command decoder (416) is configured to proactively prefetch the identified pre-fetch amount of each of the one or more command streams, wherein the set of one or more branch commands indicate whether proactive pre-fetching is enabled, and the command decoder (416) is configured to only proactively pre-fetch all or a portion of the one or more command streams when the set of one or more branch commands indicates that proactive pre-fetching is enabled.

12. The neural network accelerator (400, 800) of any preceding claim, wherein the command decoder (416) is configured to, when the command stream comprises a set of one or more branch commands that indicate an unconditional branch to a predetermined command stream identified in the set of one or more branch commands is to be performed, control the hardware accelerators and the embedded processor in accordance with commands of the predetermined command stream.

13. The neural network accelerator (800) of any preceding claim, wherein:
the neural network accelerator (800) comprises a plurality of neural network accelerator cores (402) that comprise a primary neural network accelerator core and one or more secondary neural network accelerator cores;
the at least the first neural network accelerator core comprises the primary neural network accelerator core, and the at least the first neural network accelerator core is further configured to notify the one or more secondary neural network accelerator cores of the next command stream; and
the command decoder (416) of each of the one or more secondary neural network accelerator cores is configured to control the one or more hardware accelerators (406, 408, 410, 412) and the embedded processor (414) of that core in accordance with the commands of the command stream, and when the command stream comprises a set of one or more branch commands that indicate a conditional branch is to be performed, wait for the notification from the primary neural network accelerator core of the next command stream, and then control the hardware accelerators and the embedded processor of that core in accordance with commands of the next command stream.

14. A method (600) of processing a dynamic neural network at a neural network accelerator comprising one or more hardware accelerators, an embedded processor, and a command decoder, the method comprising, at the command decoder:
controlling the one or more hardware accelerators and the embedded processor in accordance with commands of a command stream;
in response to determining that the command stream comprises a set of one or more branch commands that indicate that a conditional branch is to be performed (602), cause the embedded processor to determine a next command stream (616); and
in response to receiving information, via the hardware feedback path, from the embedded processor identifying the next command stream, controlling the one or more hardware accelerators and the embedded processor in dependence on the commands of the next command stream (624, 614).

15. An integrated circuit definition dataset that, when processed in an integrated circuit manufacturing system, configures the integrated circuit manufacturing system to manufacture the neural network accelerator (400, 800) of any of claims 1 to 13.
